# EUROPEAN PATENT APPLICATION

(11) **EP 4 145 760 A1**
(43) Date of publication of application: **08.03.2023**
(21) Application number: 21812373.5
(22) Date of filing: 21.05.2021
(51) Int. Cl.: H04L 9/00

(54) **METHOD AND APPARATUS FOR OBTAINING KEY**

(30) Priority: 26.05.2020 CN 202010454178
(71) Applicant: Huawei Technologies Co., Ltd., Shenzhen, Guangdong 518129 (CN)
(72) Inventor: XU, Bin, Shenzhen, Guangdong 518129 (CN); LI, Bingzhao, Shenzhen, Guangdong 518129 (CN); CHEN, Lei, Shenzhen, Guangdong 518129 (CN)
(74) Representative: Isarpatent
(86) International application number: PCT/CN2021/095315
(87) International publication number: WO 2021/238813

(57) **Abstract**

This application relates to a key obtaining method and an apparatus. A first core network device obtains a first key. The first core network device performs derivation based on the first key to obtain a second key and a third key, where the second key is for performing security processing on control plane signaling of a terminal device, and the third key is for performing security processing on user plane data of the terminal device. The first core network device sends the second key to a control plane entity of a first access network device, and sends the third key to a user plane entity of the first access network device. In embodiments of this application, the control plane entity of the first access network device and the user plane entity of the first access network device are different network entities, so that a control plane processing process and a user plane processing process that are of the first access network device can be isolated, thereby reducing a risk of a security processing process.

## Description

### CROSS-REFERENCE TO RELATED APPLICATION

This application claims priority to Chinese Patent Application No. 202010454178.9, filed with the China National Intellectual Property Administration on May 26, 2020 and entitled "KEY OBTAINING METHOD AND APPARATUS", which is incorporated herein by reference in its entirety.

### TECHNICAL FIELD

This application relates to the field of communication technologies, and in particular, to a key obtaining method and an apparatus.

### BACKGROUND

Transmission of wireless communication is classified into user plane transmission and control plane transmission. User plane transmission is mainly transmission of data, and control plane transmission is mainly transmission of signaling. In a wireless communication process, to ensure security of the communication process, both a transmitting end and a receiving end need to perform security processing on data and signaling. For example, the transmitting end encrypts the data, and correspondingly, the receiving end decrypts the data, to prevent the data from being read by a third party. The transmitting end performs integrity protection on the data, and correspondingly, the receiving end performs integrity verification on the data, to prevent the data from being tampered with by a third party.

In a 5th generation (the 5th generation, 5G) mobile communication technology new radio (new radio, NR) system, an architecture of a separated base station may be used, and the separated base station may include a centralized unit (centralized unit, CU) and a distributed unit (distributed unit, DU). Security processing at an access stratum includes security processing of control plane signaling and security processing of user plane data. Currently, the two types of security processing at the access stratum are both performed on a radio access network (radio access network, RAN) side, and processes of the two types of security processing cannot be isolated from each other. Consequently, an entire security processing process is risky.

### SUMMARY

Embodiments of this application provide a key obtaining method and an apparatus, to isolate a control plane processing process and a user plane processing process that are of an access network device, so as to reduce a risk of a security processing process.

According to a first aspect, the first key obtaining method is provided, and includes: A first core network device obtains a first key. The first core network device performs derivation based on the first key to obtain a second key and a third key, where the second key is for performing security processing on control plane signaling of a terminal device, and the third key is for performing security processing on user plane data of the terminal device. The first core network device sends the second key to a control plane entity of a first access network device, and sends the third key to a user plane entity of the first access network device, where the control plane entity of the first access network device performs control plane signaling communication with the terminal device, and the user plane entity of the first access network device performs user plane data communication with the terminal device.

The method may be performed by a first communication apparatus. The first communication apparatus may be a communication device or a communication apparatus, for example, a chip, that can support the communication device in implementing a function required in the method. For example, the first communication apparatus is a network device, a chip that is disposed in the network device and that is configured to implement a function of the network device, or another component configured to implement the function of the network device. In the following description process, an example in which the first communication apparatus is a network device is used. For example, the network device is a core network device.

In embodiments of this application, the control plane entity of the first access network device and the user plane entity of the first access network device are different network entities, so that a control plane processing process and a user plane processing process that are of the first access network device can be isolated, thereby reducing a risk of a security processing process. Specifically, the second key for performing security processing on the control plane signaling is sent to the control plane entity, and the third key for performing security processing on the user plane data is sent to the user plane entity. In this way, the control plane entity and the user plane entity cannot obtain the key of each other, and therefore cannot crack transmission content of each other. In this way, a control plane processing process and a user plane processing process that are of the first access network device are isolated from each other, and a security risk of an entire system is reduced.

In an optional implementation, the control plane entity of the first access network device is located on a side of the first access network device, and the user plane entity of the first access network device is located on a core network device side.

An access network device is provided by an equipment vendor, deployed by an operator, and generally deployed outdoors. Therefore, if the access network device can read user data, a risk is caused to data security. In this case, although security processing of user plane data and security processing of control plane signaling are isolated from each other, if both the user plane entity and the control plane entity are still on an access network side, user data still has a security risk. Therefore, in this embodiment of this application, the control plane entity of the first access network device may be located on the access network side, and the user plane entity of the first access network device may be located on the core network side. Generally, access stratum control signaling is for assisting transmission of the user plane data, and what a user really cares about is the user plane data. Therefore, security processing of the user plane data is performed on the core network side, so that security of user plane data processing can be first ensured. In addition, it can be further ensured, by isolating a security processing process of a user plane from a security processing process of a control plane, that the access network side cannot obtain the key for user plane data security processing, and a security risk of the user plane data can be significantly reduced.

In an optional implementation, the first key is obtained based on a first root key corresponding to the terminal device, and the first root key is stored in a core network device.

On a core network side, a root key corresponding to each terminal device may be prestored, and then at least one core network device may perform a step-by-step derivation process based on the root key, to obtain keys required by different devices or required in different security processes. For example, the first core network device can obtain a root key corresponding to the terminal device, where for example, the root key is referred to as the first root key. The first core network device may perform derivation based on the first root key, or the first core network device may perform further derivation based on a key obtained through derivation based on the first root key, to obtain a key used by the first core network device, where for example, the key is referred to as a fourth key. Then, the first core network device may obtain the first key through derivation based on the fourth key, or may obtain another key through derivation based on the fourth key, for example, obtain a key for security processing in a non-access stratum communication process.

In an optional implementation, the method further includes:
the first core network device receives an input parameter from a second access network device, where the input parameter is for determining the first key, the second access network device is a source access network device for cell handover of the terminal device, and the first access network device is a target access network device for cell handover of the terminal device.

In a cell handover process, the terminal device is handed over from a cell of the second access network device to a cell of the first access network device for communication. To protect independence of security processing processes between different access network devices, keys that are for security processing and that are used by the first access network device and the second access network device to communicate with the terminal device cannot be the same. For example, the key used by the first access network device to communicate with the terminal device may be derived based on the key that is of the second access network device and that corresponds to the terminal device. In embodiments of this application, considering a potential security risk on an access network device side, a core network device needs to perform a key derivation process. Therefore, the second access network device needs to send, to the first core network device, the input parameter required for deriving the key used by the first access network device, and the first core network device derives the key used by the first access network device, and sends, to the first access network device after derivation, the key used by the first access network device.

In an optional implementation, the input parameter includes a PCI of a first cell and/or an ARFCN of the first cell, and the first cell is a target cell for cell handover of the terminal device.

For example, the input parameter may include the PCI of the first cell, or include a frequency of the first cell, or include the PCI of the first cell and the frequency of the first cell. Alternatively, the input parameter may further include other information, provided that the input parameter can be for determining the first key. The frequency of the first cell is, for example, the ARFCN of the first cell.

In an optional implementation, the input parameter is included in a first handover request message, the first handover request message is for requesting to hand over the terminal device to the first cell, and the first cell is the target cell for cell handover of the terminal device.

For example, the cell handover process is a cross-base station cell handover process based on an N2 interface between a base station and a core network device. In this case, when determining that the terminal device performs cell handover, the second access network device may send a handover request message to the first core network device, to forward the handover request message to the first access network device via the first core network device. Optionally, the handover request message sent by the second access network device to the first core network device may include the input parameter. This may be understood as that the second access network device sends the handover request message to the first core network device, where for example, the message is referred to as the first handover request message, and the first core network device receives the first handover request message from the second access network device, where the first handover request message includes the input parameter. In other words, in this embodiment of this application, no new message needs to be added, but the input parameter may be sent to the first core network device via the existing handover request message. This is more compatible with an existing solution, and signaling overheads can be reduced.

In an optional implementation, the second key is included in a second handover request message, and the second handover request message is for requesting to hand over the terminal device to the first cell.

For example, the cell handover process is the cross-base station cell handover process based on the N2 interface between the base station and the core network device. After receiving the first handover request message from the second access network device, the first core network device forwards the first handover request message to the first access network device in a conventional technology. This procedure may be used in embodiments of this application. For example, the first core network device may generate the second handover request message, where the second handover request message includes the second key, and the first core network device sends the second handover request message to the first access network device, so as to send the second key to the first access network device. For example, the first core network device may add the second key to the first handover request message, to obtain the second handover request message. In this manner, not only the first handover request message is forwarded to the first access network device, but also the second key is sent to the first access network device. In this way, the second key is sent to the first access network device without a need to newly add a message. This helps compatibility with the existing solution, and signaling overheads can be reduced.

In an optional implementation, the method further includes:
the first core network device sends an NCC to the terminal device, where the NCC is for determining the second key and/or the third key.

The terminal device may determine a to-be-used key based on the NCC, to ensure consistency with a key used on a network side. The NCC has a counting function, and different NCC values correspond to different key derivation processes or different quantities of key derivation times. For example, the NCC may indicate a quantity of derivation times for deriving the first key by the first core network device, or the NCC may indicate a derivation track or a derivation process record for deriving the first key by the first core network device. The terminal device is equipped with a built-in root key of the terminal device, where for example, the root key is referred to as a second root key. The second root key and the first root key may be a same root key, or may be different root keys. The terminal device can obtain, through derivation based on the second root key in a derivation manner that is the same as that of the core network device, the key used by the terminal device. After obtaining the NCC, the terminal device may determine the derivation manner of the core network device based on the indication of the NCC, so that the key used by the terminal device and the key used by the first access network device are consistent. For example, if the NCC indicates that the quantity of derivation times is n, the terminal device obtains the first key through derivation for n times, where n is a positive integer, and the terminal device may further obtain the second key and the third key. For another example, if the NCC indicates the derivation track or the derivation process record, the terminal device may obtain the first key through derivation based on a same track or a same derivation process, to further obtain the second key and the third key.

In an optional implementation, security processing includes one or more of the following: integrity protection, integrity verification, encryption, or decryption.

Security processing performed by the control plane entity or the user plane entity of the first access network device in embodiments of this application may include one or more of the following processing manners: integrity protection, integrity verification, encryption, or decryption.

According to a second aspect, the second key obtaining method is provided. The method includes: A second access network device determines to hand over a terminal device from the second access network device to a first access network device. The second access network device sends an input parameter to a first core network device, where the input parameter is for determining a first key, the first key is for determining a second key and a third key, the second key is for performing security processing on control plane signaling of the terminal device, and the third key is for performing security processing on user plane data of the terminal device.

The method may be performed by a second communication apparatus. The second communication apparatus may be a communication device or a communication apparatus, for example, a chip, that can support the communication device in implementing a function required in the method. For example, the second communication apparatus is a network device, a chip that is disposed in the network device and that is configured to implement a function of the network device, or another component configured to implement the function of the network device. For example, the network device is an access network device, where for example, the network device is referred to as the second access network device. In the following description process, an example in which the second communication apparatus is the second access network device is used.

In an optional implementation, the input parameter includes a PCI of a first cell and/or an ARFCN of the first cell, and the first cell is a target cell for cell handover of the terminal device.

In an optional implementation, the input parameter is included in a first handover request message, the first handover request message is for requesting to hand over the terminal device to the first cell, and the first cell is the target cell for cell handover of the terminal device.

For technical effects brought by the second aspect or the possible implementations, refer to the descriptions of the technical effects brought by the first aspect or the corresponding implementations.

According to a third aspect, a data packet sending method is provided. The method includes: obtaining a first data packet; performing security processing on the first data packet at a first protocol layer by using a first key, to obtain a second data packet; encrypting the second data packet at a PDCP layer by using a second key, to obtain a third data packet; and sending the third data packet.

The method may be performed by a third communication apparatus. The third communication apparatus may be a communication device or a communication apparatus, for example, a chip, that can support the communication device in implementing a function required in the method. For example, the third communication apparatus is a terminal device, a chip that is disposed in the terminal device and that is configured to implement a function of the terminal device, or another component configured to implement the function of the terminal device. Alternatively, for example, the third communication apparatus is a network device, a chip that is disposed in the network device and that is configured to implement a function of the network device, or another component configured to implement a function of the network device. For example, the network device is a core network device.

In embodiments of this application, a two-level security processing mechanism is set for a data packet. An access network device can perform only one level of security processing (namely, security processing at the PDCP layer), but cannot perform security processing at a first protocol layer. Therefore, data is invisible to the access network device, and the access network device cannot obtain the data, thereby ensuring security of the data on an access network device side.

In an optional implementation, the first key is obtained based on a first root key corresponding to the terminal device.

Before performing security processing on the first data packet at the first protocol layer by using the first key, a first device first needs to obtain the first key. If the first device is a terminal device, the terminal device may have a built-in root key, and the terminal device may perform derivation on the root key according to a first rule, to obtain the first key. Alternatively, if the first device is a core network device, the core network device also has a key corresponding to the terminal device, where for example, the key is referred to as a third key. For example, if the core network device is an AMF, the key (namely, the third key) that is of the core network device and that corresponds to the terminal device is K_{AMF}. The key that is of the core network device and that corresponds to the terminal device is a key used when the core network device communicates with the terminal device, or a key that can be used to determine the key used when the core network device communicates with the terminal device. This may be understood as that when communicating with different terminal devices, the core network device may perform security processing by using keys that correspond to corresponding terminal devices and that are for performing security processing on access stratum control plane signaling and user plane data. The core network device may perform derivation on the third key according to the first rule, to obtain the first key. The first rule may be configured by the core network device, or determined by the terminal device through negotiation with the core network device, or specified in a protocol. In addition, optionally, the terminal device may interact with the core network device, to ensure that the first rules used by the terminal device and the core network device are consistent.

In an optional implementation, the performing security processing on the first data packet at a first protocol layer by using a first key, to obtain a second data packet includes:
performing security processing on a payload of the first data packet at the first protocol layer by using the first key, to obtain a security-processed payload; and
combining a packet header of the first data packet and the security-processed payload, to obtain the second data packet.

An example in which a data packet is an IP packet or an Ethernet packet is used. When a transmitting end of a data packet processes a data packet, to save transmission resource overheads, a PDCP layer of the transmitting end of the data packet may compress a packet header of the data packet, for example, compress an IP packet header or an Ethernet packet header by using a header compression protocol. A length of a compressed packet header is shortened, thereby saving transmission resource overheads. The first protocol layer is introduced in this embodiment of this application. This may cause a problem: Security processing is performed on an entire data packet at the first protocol layer. After the first protocol layer delivers a security-processed data packet to the PDCP layer, the PDCP layer cannot identify a packet header of the data packet, and consequently cannot compress the packet header. Therefore, embodiments of this application provide a solution in which the first device removes the packet header of the first data packet at the first protocol layer, or this is understood as that the packet header of the first data packet is separated from the payload. Then, the first device performs security processing, for example, encryption and/or integrity protection, on the payload of the first data packet at the first protocol layer by using the first key, to obtain the security-encrypted payload. The first device combines the packet header of the first data packet and the security-processed payload at the first protocol layer, and a combined data packet is referred to as the second data packet. In this case, a packet header of the second data packet is the packet header of the first data packet, and a payload of the second data packet is the payload on which security processing has been performed. Then, the first protocol layer may deliver the second data packet to the PDCP layer of the first device. Because security processing is not performed on the packet header (namely, the packet header of the first data packet) of the second data packet, the PDCP layer of the first device can compress the packet header of the second data packet. Therefore, the PDCP layer can normally compress a packet header, so as to reduce transmission overheads.

In an optional implementation, the encrypting the second data packet at a PDCP layer by using a second key, to obtain a third data packet includes:
compressing the packet header of the first data packet at the PDCP layer to obtain a compressed packet header; and
encrypting the compressed packet header and the security-processed payload by using the second key, to obtain the third data packet.

If the second data packet includes a combination of the packet header of the first data packet and the security-processed payload, the first device may remove the packet header (namely, the packet header of the first data packet) of the second data packet at the PDCP layer, or this is understood as that the packet header of the first data packet is separated from the payload. Then, the first device compresses the packet header of the first data packet at the PDCP layer to obtain the compressed packet header, combines the compressed packet header and the security-processed payload to obtain a combination, and performs second security processing on the combination at the PDCP layer by using the second key, to obtain the third data packet. In this manner, a packet header of a data packet may still be compressed at the PDCP layer, so that transmission resource overheads can be reduced.

In an optional implementation, the performing security processing on the first data packet at a first protocol layer by using a first key, to obtain a second data packet includes:
compressing a packet header of the first data packet at the first protocol layer to obtain a compressed packet header; and
performing security processing on the compressed packet header and a payload of the first data packet by using the first key, to obtain the second data packet.

The first device removes the packet header of the first data packet at the first protocol layer, or this is understood as that the packet header of the first data packet is separated from the payload. Then, the first device compresses the packet header of the first data packet at the first protocol layer to obtain the compressed packet header. The first device combines the compressed packet header and the payload of the first data packet at the first protocol layer to obtain a combination, and performs security processing, for example, encryption and/or integrity protection, on the combination to obtain the second data packet, that is, the second data packet is a data packet on which security processing is performed. Then, the first protocol layer delivers the second data packet to the PDCP layer of the first device. Because security processing is performed on the second data packet, the PDCP layer cannot perform processing such as decryption or integrity verification on the second data packet. In this case, the PDCP layer does not need to perform a compression operation. Because the first device has compressed the packet header of the first data packet at the first protocol layer, transmission resource overheads can also be reduced.

In an optional implementation, security processing includes one or more of the following: integrity protection, integrity verification, encryption, or decryption.

Security processing (where for example, security processing is referred to as first security processing) herein may include one or more of the following processing manners: integrity protection, integrity verification, encryption, or decryption. For example, if the first device is a transmitting end of the first data packet, the first device may perform integrity protection, encryption, or integrity protection and encryption on the first data packet at the first protocol layer. For another example, if the first device is a receiving end of the first data packet, the first device may perform integrity verification, decryption, or integrity verification and decryption on the first data packet at the first protocol layer. In this embodiment of this application, an example in which the first device is a transmitting end of the first data packet is used.

According to a fourth aspect, a data packet receiving method is provided. The method includes: receiving a third data packet; decrypting the third data packet at a PDCP layer by using a second key, to obtain a second data packet, where the second data packet is a data packet on which security processing is performed; and sending the second data packet to a core network device.

The method may be performed by a fourth communication apparatus. The fourth communication apparatus may be a communication device or a communication apparatus, for example, a chip, that can support the communication device in implementing a function required in the method. For example, the fourth communication apparatus is a second device. For example, the second device is a network device, a chip that is disposed in the network device and that is configured to implement a function of the network device, or another component configured to implement a function of the network device. For example, the network device is an access network device.

If a transmitting end of the second data packet is a terminal device and a receiving end is a core network device, the method may be: sending the second data packet to the core network device; or if a transmitting end of the second data packet is a core network device and a receiving end is a terminal device, the method may be: sending the second data packet to the terminal device. In embodiments of this application, a two-level security processing mechanism is set for a data packet. An intermediate device (such as an access network device) can perform only one level of security processing (namely, security processing at the PDCP layer), but cannot perform security processing at a first protocol layer. Therefore, data is invisible to the access network device, and the access network device cannot obtain the data, thereby ensuring security of the data on an access network device side.

In an optional implementation, the decrypting the third data packet at a PDCP layer by using a second key, to obtain a second data packet includes:
decrypting the third data packet at the PDCP layer by using the second key, to obtain a compressed packet header and a security-processed payload;
decompressing the compressed packet header to obtain a packet header; and
combining the packet header and the security-processed payload, to obtain the second data packet.

After receiving the third data packet, the second device delivers the third data packet to the PDCP layer of the second device. In this case, the second device may perform third security processing on the third data packet at the PDCP layer by using the second key, where the third security processing is, for example, decryption. If the second device obtains the compressed packet header and the security-processed payload after performing third security processing on the third data packet at the PDCP layer, the second device may remove a packet header (namely, a packet header of a first data packet) of the second data packet at the PDCP layer, or this is understood as that the packet header of the first data packet is separated from the security-processed payload. Then, the second device decompresses the compressed packet header at the PDCP layer to obtain a packet header, where the packet header is the packet header of the first data packet. The second device may obtain the second data packet by combining the packet header and the security-processed payload at the PDCP layer.

In an optional implementation, security processing includes one or more of the following: integrity protection, integrity verification, encryption, or decryption.

Security processing (where for example, security processing is referred to as first security processing) herein may include one or more of the following processing manners: integrity protection, integrity verification, encryption, or decryption. For example, if the first device is a transmitting end of the first data packet, the first device may perform integrity protection, encryption, or integrity protection and encryption on the first data packet at the first protocol layer. For another example, if the first device is a receiving end of the first data packet, the first device may perform integrity verification, decryption, or integrity verification and decryption on the first data packet at the first protocol layer. In this embodiment of this application, an example in which the first device is a transmitting end of the first data packet is used.

According to a fifth aspect, a communication apparatus is provided. The communication apparatus is, for example, the first communication apparatus described above. The first communication apparatus is configured to perform the method according to any one of the first aspect or the possible implementations. Specifically, the first communication apparatus may include a module configured to perform the method according to any one of the first aspect or the possible implementations. For example, the apparatus includes a processing module, and optionally may further include a transceiver module. For example, the transceiver module may include a sending module and a receiving module. The sending module and the receiving module may be different functional modules, or may be a same functional module but can implement different functions. For example, the first communication apparatus is a communication device, or is a chip or another component disposed in the communication device. For example, the communication device is a network device. For example, the network device is a core network device, for example, a first core network device. An example in which the first communication apparatus is a first core network device is used below. For example, the transceiver module may alternatively be implemented by using a transceiver, and the processing module may alternatively be implemented by using a processor (or a processing circuit). Alternatively, the sending module may be implemented as a transmitter, and the receiving module may be implemented as a receiver. The transmitter and the receiver may be different functional modules, or may be a same functional module but can implement different functions. If the first communication apparatus is a communication device, the transceiver is implemented, for example, by an antenna, a feeder, and a codec in the communication device. Alternatively, if the first communication apparatus is a chip disposed in the communication device, the transceiver (or the transmitter and the receiver) is, for example, a communication interface in the chip. The communication interface is connected to a radio frequency transceiver component in the communication device, to receive and send information via the radio frequency transceiver component. In a description process of the fifth aspect, an example in which the first communication apparatus is a first core network device and includes the processing module and the transceiver module continues to be used for description.

The processing module is configured to obtain a first key, where
the processing module is configured to perform derivation based on the first key to obtain a second key and a third key, where the second key is for performing security processing on control plane signaling of a terminal device, and the third key is for performing security processing on user plane data of the terminal device.

The transceiver module is configured to: send the second key to a control plane entity of a first access network device, and send the third key to a user plane entity of the first access network device, where the control plane entity of the first access network device performs control plane signaling communication with the terminal device, and the user plane entity of the first access network device performs user plane data communication with the terminal device.

In an optional implementation, the control plane entity of the first access network device is located on a side of the first access network device, and the user plane entity of the first access network device is located on a core network device side.

In an optional implementation, the first key is obtained based on a first root key corresponding to the terminal device, and the first root key is stored in a core network device.

In an optional implementation, the transceiver module is further configured to receive an input parameter from a second access network device, where the input parameter is for determining the first key, the second access network device is a source access network device for cell handover of the terminal device, and the first access network device is a target access network device for cell handover of the terminal device.

In an optional implementation, the input parameter includes a PCI of a first cell and/or an ARFCN of the first cell, and the first cell is a target cell for cell handover of the terminal device.

In an optional implementation, the input parameter is included in a first handover request message, the first handover request message is for requesting to hand over the terminal device to the first cell, and the first cell is the target cell for cell handover of the terminal device.

In an optional implementation, the second key is included in a second handover request message, and the second handover request message is for requesting to hand over the terminal device to the first cell.

In an optional implementation, the transceiver module is further configured to send an NCC to the terminal device, where the NCC is for determining the second key and/or the third key.

In an optional implementation, security processing includes one or more of the following: integrity protection, integrity verification, encryption, or decryption.

For technical effects brought by the fifth aspect or the optional implementations, refer to descriptions of the technical effects brought by the first aspect or the corresponding implementations.

According to a sixth aspect, a communication apparatus is provided. The communication apparatus is, for example, the second communication apparatus described above. The second communication apparatus is configured to perform the method according to any one of the second aspect or the possible implementations. Specifically, the second communication apparatus may include a module configured to perform the method according to any one of the second aspect or the possible implementations. For example, the apparatus includes a processing module, and optionally may further include a transceiver module. For example, the transceiver module may include a sending module and a receiving module. The sending module and the receiving module may be different functional modules, or may be a same functional module but can implement different functions. For example, the second communication apparatus is a communication device, or is a chip or another component disposed in the communication device. For example, the communication device is a network device. For example, the network device is an access network device, for example, a second access network device. For example, the access network device is a base station. An example in which the second communication apparatus is a second access network device is used below. For example, the transceiver module may alternatively be implemented by using a transceiver, and the processing module may alternatively be implemented by using a processor (or a processing circuit). Alternatively, the sending module may be implemented as a transmitter, and the receiving module may be implemented as a receiver. The transmitter and the receiver may be different functional modules, or may be a same functional module but can implement different functions. If the second communication apparatus is a communication device, the transceiver is implemented, for example, by an antenna, a feeder, and a codec in the communication device. Alternatively, if the second communication apparatus is a chip disposed in the communication device, the transceiver (or the transmitter and the receiver) is, for example, a communication interface in the chip. The communication interface is connected to a radio frequency transceiver component in the communication device, to receive and send information via the radio frequency transceiver component. In a description process of the sixth aspect, an example in which the second communication apparatus is a second access network device and includes the processing module and the transceiver module continues to be used for description. The processing module is configured to determine to hand over a terminal device from the second access network device to a first access network device.

The transceiver module is configured to send an input parameter to a first core network device, where the input parameter is for determining a first key, the first key is for determining a second key and a third key, the second key is for performing security processing on control plane signaling of the terminal device, and the third key is for performing security processing on user plane data of the terminal device.

In an optional implementation, the input parameter includes a PCI of a first cell and/or an ARFCN of the first cell, and the first cell is a target cell for cell handover of the terminal device.

In an optional implementation, the input parameter is included in a first handover request message, the first handover request message is for requesting to hand over the terminal device to the first cell, and the first cell is the target cell for cell handover of the terminal device.

For technical effects brought by the sixth aspect or the optional implementations, refer to descriptions of the technical effects brought by the second aspect or the corresponding implementations.

According to a seventh aspect, a communication apparatus is provided. The communication apparatus is, for example, the third communication apparatus described above. The third communication apparatus is configured to perform the method according to any one of the third aspect or the possible implementations. Specifically, the third communication apparatus may include a module configured to perform the method according to any one of the third aspect or the possible implementations. For example, the apparatus includes a processing module, and optionally may further include a transceiver module. For example, the transceiver module may include a sending module and a receiving module. The sending module and the receiving module may be different functional modules, or may be a same functional module but can implement different functions. For example, the third communication apparatus is a communication device, or is a chip or another component disposed in the communication device. For example, the communication device is a first device. For example, the first device is a terminal device. Alternatively, for example, the first device is a core network device. For example, the transceiver module may alternatively be implemented by using a transceiver, and the processing module may alternatively be implemented by using a processor (or a processing circuit). Alternatively, the sending module may be implemented as a transmitter, and the receiving module may be implemented as a receiver. The transmitter and the receiver may be different functional modules, or may be a same functional module but can implement different functions. If the third communication apparatus is a communication device, the transceiver is implemented, for example, by an antenna, a feeder, and a codec in the communication device. Alternatively, if the third communication apparatus is a chip disposed in the communication device, the transceiver (or the transmitter and the receiver) is, for example, a communication interface in the chip. The communication interface is connected to a radio frequency transceiver component in the communication device, to receive and send information via the radio frequency transceiver component. In a description process of the seventh aspect, the processing module and the transceiver module are used as examples for description.

The processing module is configured to obtain a first data packet.

The processing module is further configured to perform security processing on the first data packet at a first protocol layer by using a first key, to obtain a second data packet.

The processing module is further configured to encrypt the second data packet at a PDCP layer by using a second key, to obtain a third data packet.

The transceiver module is configured to send the third data packet.

In an optional implementation, the first key is obtained based on a first root key corresponding to the terminal device.

In an optional implementation, the processing module is configured to perform security processing on the first data packet at the first protocol layer by using the first key, to obtain the second data packet in the following manner:
performing security processing on a payload of the first data packet at the first protocol layer by using the first key, to obtain a security-processed payload; and
combining a packet header of the first data packet and the security-processed payload, to obtain the second data packet.

In an optional implementation, the processing module is configured to encrypt the second data packet at the PDCP layer by using the second key, to obtain the third data packet in the following manner:
compressing the packet header of the first data packet at the PDCP layer to obtain a compressed packet header; and
encrypting the compressed packet header and the security-processed payload by using the second key, to obtain the third data packet.

In an optional implementation, the processing module is configured to perform security processing on the first data packet at the first protocol layer by using the first key, to obtain the second data packet in the following manner:
compressing a packet header of the first data packet at the first protocol layer to obtain a compressed packet header; and
performing security processing on the compressed packet header and a payload of the first data packet by using the first key, to obtain the second data packet.

In an optional implementation, security processing includes one or more of the following: integrity protection, integrity verification, encryption, or decryption.

For technical effects brought by the seventh aspect or the optional implementations, refer to descriptions of the technical effects brought by the third aspect or the corresponding implementations.

According to an eighth aspect, a communication apparatus is provided. The communication apparatus is, for example, the fourth communication apparatus described above. The fourth communication apparatus is configured to perform the method according to any one of the fourth aspect or the possible implementations. Specifically, the fourth communication apparatus may include a module configured to perform the method according to any one of the fourth aspect or the possible implementations. For example, the apparatus includes a processing module, and optionally may further include a transceiver module. For example, the transceiver module may include a sending module and a receiving module. The sending module and the receiving module may be different functional modules, or may be a same functional module but can implement different functions. For example, the fourth communication apparatus is a communication device, or is a chip or another component disposed in the communication device. For example, the communication device is a network device. For example, the network device is an access network device. For example, the access network device is a base station. An example in which the fourth communication apparatus is an access network device is used below. For example, the transceiver module may alternatively be implemented by using a transceiver, and the processing module may alternatively be implemented by using a processor (or a processing circuit). Alternatively, the sending module may be implemented as a transmitter, and the receiving module may be implemented as a receiver. The transmitter and the receiver may be different functional modules, or may be a same functional module but can implement different functions. If the fourth communication apparatus is a communication device, the transceiver is implemented, for example, by an antenna, a feeder, and a codec in the communication device. Alternatively, if the fourth communication apparatus is a chip disposed in the communication device, the transceiver (or the transmitter and the receiver) is, for example, a communication interface in the chip. The communication interface is connected to a radio frequency transceiver component in the communication device, to receive and send information via the radio frequency transceiver component. In a description process of the eighth aspect, an example in which the fourth communication apparatus is an access network device and includes the processing module and the transceiver module continues to be used for description.

The transceiver module is configured to receive a third data packet.

The processing module is configured to decrypt, at a PDCP layer, the third data packet by using a second key, to obtain a second data packet, where the second data packet is a data packet on which security processing is performed.

The transceiver module is further configured to send the second data packet to a core network device.

In an optional implementation, the processing module is configured to decrypt the third data packet at the PDCP layer by using the second key, to obtain the second data packet in the following manner:
decrypting the third data packet at the PDCP layer by using the second key, to obtain a compressed packet header and a security-processed payload;
decompressing the compressed packet header to obtain a packet header; and
combining the packet header and the security-processed payload, to obtain the second data packet.

In an optional implementation, security processing includes one or more of the following: integrity protection, integrity verification, encryption, or decryption.

For technical effects brought by the eighth aspect or the optional implementations, refer to the descriptions of the technical effects brought by the fourth aspect or the corresponding implementations.

According to a ninth aspect, a communication apparatus (where the communication apparatus is also referred to as a network apparatus) is provided. The communication apparatus is, for example, the first communication apparatus described above. The communication apparatus includes a processor (or a processing circuit) and a communication interface (or an interface circuit). The communication interface may be configured to communicate with another apparatus or device. Optionally, the communication apparatus may further include a memory, configured to store computer instructions. The processor and the memory are coupled to each other, to implement the method according to any one of the first aspect or the possible implementations. Alternatively, the first communication apparatus may not include a memory, and the memory may be located outside the first communication apparatus. The processor, the memory, and the communication interface are coupled to each other, to implement the method according to any one of the first aspect or the possible implementations. For example, when the processor executes the computer instructions stored in the memory, the first communication apparatus is enabled to perform the method according to any one of the first aspect or the possible implementations. For example, the first communication apparatus is a communication device, or is a chip or another component disposed in the communication device. For example, the communication device is a network device. For example, the network device is a core network device, for example, a first core network device.

If the first communication apparatus is a communication device, the communication interface is implemented, for example, by a transceiver (or a transmitter and a receiver) in the communication device, and the transceiver is implemented, for example, by an antenna, a feeder, and a codec in the communication device. Alternatively, if the first communication apparatus is a chip disposed in the communication device, the communication interface is, for example, an input/output interface such as an input/output pin of the chip. The communication interface is connected to a radio frequency transceiver component in the communication device, to receive and send information via the radio frequency transceiver component.

According to a tenth aspect, a communication apparatus (where the communication apparatus is also referred to as a network apparatus) is provided. The communication apparatus is, for example, the second communication apparatus described above. The communication apparatus includes a processor (or a processing circuit) and a communication interface (or an interface circuit). The communication interface may be configured to communicate with another apparatus or device. Optionally, the communication apparatus may further include a memory, configured to store computer instructions. The processor and the memory are coupled to each other, to implement the method according to any one of the second aspect or the possible implementations. Alternatively, the second communication apparatus may not include a memory, and the memory may be located outside the second communication apparatus. The processor, the memory, and the communication interface are coupled to each other, to implement the method according to any one of the second aspect or the possible implementations. For example, when the processor executes the computer instructions stored in the memory, the second communication apparatus is enabled to perform the method according to any one of the second aspect or the possible implementations. For example, the second communication apparatus is a communication device, or is a chip or another component disposed in the communication device. For example, the communication device is a network device. For example, the network device is an access network device, for example, a second access network device.

If the second communication apparatus is a communication device, the communication interface is implemented, for example, by a transceiver (or a transmitter and a receiver) in the communication device, and the transceiver is implemented, for example, by an antenna, a feeder, and a codec in the communication device. Alternatively, if the second communication apparatus is a chip disposed in the communication device, the communication interface is, for example, an input/output interface such as an input/output pin of the chip. The communication interface is connected to a radio frequency transceiver component in the communication device, to receive and send information via the radio frequency transceiver component.

According to an eleventh aspect, a communication apparatus (where the communication apparatus is also referred to as a network apparatus) is provided. The communication apparatus is, for example, the third communication apparatus described above. The communication apparatus includes a processor (or a processing circuit) and a communication interface (or an interface circuit). The communication interface may be configured to communicate with another apparatus or device. Optionally, the communication apparatus may further include a memory, configured to store computer instructions. The processor and the memory are coupled to each other, to implement the method according to any one of the third aspect or the possible implementations. Alternatively, the first communication apparatus may not include a memory, and the memory may be located outside the third communication apparatus. The processor, the memory, and the communication interface are coupled to each other, to implement the method according to any one of the third aspect or the possible implementations. For example, when the processor executes the computer instructions stored in the memory, the first communication apparatus is enabled to perform the method according to any one of the third aspect or the possible implementations. For example, the third communication apparatus is a communication device, or is a chip or another component disposed in the communication device. For example, the communication device is a first device. For example, the first device is a terminal device. Alternatively, for example, the first device is a network device. For example, the network device is a core network device.

If the third communication apparatus is a communication device, the communication interface is implemented, for example, by a transceiver (or a transmitter and a receiver) in the communication device, and the transceiver is implemented, for example, by an antenna, a feeder, and a codec in the communication device. Alternatively, if the third communication apparatus is a chip disposed in the communication device, the communication interface is, for example, an input/output interface such as an input/output pin of the chip. The communication interface is connected to a radio frequency transceiver component in the communication device, to receive and send information via the radio frequency transceiver component.

According to a twelfth aspect, a communication apparatus (where the communication apparatus is also referred to as a network apparatus) is provided. The communication apparatus is, for example, the fourth communication apparatus described above. The communication apparatus includes a processor (or a processing circuit) and a communication interface (or an interface circuit). The communication interface may be configured to communicate with another apparatus or device. Optionally, the communication apparatus may further include a memory, configured to store computer instructions. The processor and the memory are coupled to each other, to implement the method according to any one of the fourth aspect or the possible implementations. Alternatively, the fourth communication apparatus may not include a memory, and the memory may be located outside the fourth communication apparatus. The processor, the memory, and the communication interface are coupled to each other, to implement the method according to any one of the fourth aspect or the possible implementations. For example, when the processor executes the computer instructions stored in the memory, the fourth communication apparatus is enabled to perform the method according to any one of the fourth aspect or the possible implementations. For example, the fourth communication apparatus is a communication device, or is a chip or another component disposed in the communication device. For example, the communication device is a second device. For example, the second device is a network device. For example, the network device is an access network device.

If the fourth communication apparatus is a communication device, the communication interface is implemented, for example, by a transceiver (or a transmitter and a receiver) in the communication device, and the transceiver is implemented, for example, by an antenna, a feeder, and a codec in the communication device. Alternatively, if the fourth communication apparatus is a chip disposed in the communication device, the communication interface is, for example, an input/output interface such as an input/output pin of the chip. The communication interface is connected to a radio frequency transceiver component in the communication device, to receive and send information via the radio frequency transceiver component.

According to a thirteenth aspect, a first communication system is provided. The first communication system includes the communication apparatus according to the fifth aspect or the communication apparatus according to the ninth aspect, and includes the communication apparatus according to the sixth aspect or the communication apparatus according to the tenth aspect.

According to a fourteenth aspect, a second communication system is provided. The second communication system includes the communication apparatus according to the seventh aspect or the communication apparatus according to the eleventh aspect, and includes the communication apparatus according to the eighth aspect or the communication apparatus according to the twelfth aspect.

According to a fifteenth aspect, a computer-readable storage medium is provided. The computer-readable storage medium is configured to store a computer program. When the computer program is run on a computer, the computer is enabled to perform the method according to any one of the first aspect or the possible implementations.

According to a sixteenth aspect, a computer-readable storage medium is provided. The computer-readable storage medium is configured to store a computer program. When the computer program is run on a computer, the computer is enabled to perform the method according to any one of the second aspect or the possible implementations.

According to a seventeenth aspect, a computer-readable storage medium is provided. The computer-readable storage medium is configured to store a computer program. When the computer program is run on a computer, the computer is enabled to perform the method according to any one of the third aspect or the possible implementations.

According to an eighteenth aspect, a computer-readable storage medium is provided. The computer-readable storage medium is configured to store a computer program. When the computer program is run on a computer, the computer is enabled to perform the method according to any one of the fourth aspect or the possible implementations.

According to a nineteenth aspect, a computer program product including instructions is provided. The computer program product is configured to store a computer program. When the computer program is run on a computer, the computer is enabled to perform the method according to any one of the first aspect or the possible implementations.

According to a twentieth aspect, a computer program product including instructions is provided. The computer program product is configured to store a computer program. When the computer program is run on a computer, the computer is enabled to perform the method according to any one of the second aspect or the possible implementations.

According to a twenty-first aspect, a computer program product including instructions is provided. The computer program product is configured to store a computer program. When the computer program is run on a computer, the computer is enabled to perform the method according to any one of the third aspect or the possible implementations.

According to a twenty-second aspect, a computer program product including instructions is provided. The computer program product is configured to store a computer program. When the computer program is run on a computer, the computer is enabled to perform the method according to any one of the fourth aspect or the possible implementations.

According to a twenty-third aspect, a core network device or a communication apparatus is provided, and is configured to perform the method in the first aspect.

According to a twenty-fourth aspect, an access network device or a communication apparatus is provided, and is configured to perform the method in the second aspect.

According to a twenty-fifth aspect, a core network device, a terminal device, or a communication apparatus is provided, and is configured to perform the method in the third aspect.

According to a twenty-sixth aspect, an access network device or a communication apparatus is provided, and is configured to perform the method in the fourth aspect.

In embodiments of this application, the control plane entity of the first access network device and the user plane entity of the first access network device are different network entities, so that the control plane processing process and the user plane processing process that are of the first access network device can be isolated, thereby reducing the risk of the security processing process.

### BRIEF DESCRIPTION OF DRAWINGS

FIG. 1 is a schematic diagram of air interface protocol stacks of a terminal device and an access network device;
FIG. 2 is a schematic diagram of a protocol stack of a CU-DU separated base station architecture;
FIG. 3 is a flowchart of a cross-base station cell handover process based on an Xn interface between base stations;
FIG. 4A to FIG. 4C are schematic diagrams of several scenarios to which embodiments of this application are applied;
FIG. 5 is a flowchart of the first key obtaining method according to an embodiment of this application;
FIG. 6 is a flowchart of the second key obtaining method according to an embodiment of this application;
FIG. 7 is a flowchart of the third key obtaining method according to an embodiment of this application;
FIG. 8 is a flowchart of a data packet sending and receiving method according to an embodiment of this application;
FIG. 9 is a schematic diagram of a protocol stack for transmitting a data packet by using a data packet sending and receiving method according to an embodiment of this application;
FIG. 10 is a schematic block diagram of a core network device according to an embodiment of this application;
FIG. 11 is a schematic block diagram of an access network device according to an embodiment of this application;
FIG. 12 is a schematic block diagram of a first device according to an embodiment of this application;
FIG. 13 is a schematic block diagram of a second device according to an embodiment of this application;
FIG. 14 is a schematic block diagram of a communication apparatus according to an embodiment of this application;
FIG. 15 is another schematic block diagram of a communication apparatus according to an embodiment of this application;
FIG. 16 is still another schematic block diagram of a communication apparatus according to an embodiment of this application; and
FIG. 17 is yet another schematic block diagram of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) Terminal device: A terminal device includes a device that provides voice and/or data connectivity for a user, and specifically, includes a device that provides voice for the user, includes a device that provides data connectivity for the user, or includes a device that provides voice and data connectivity for the user. For example, the terminal device may include a handheld device having a wireless connection function or a processing device connected to a wireless modem. The terminal device may communicate with a core network through a radio access network (radio access network, RAN), and exchange voice or data with the RAN, or exchange voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (where the mobile phone is also referred to as a "cellular" phone), a computer with a mobile terminal device, a portable, pocket-sized, handheld, or computer built-in mobile apparatus, or the like. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located on a vehicle (for example, placed in the vehicle or installed in the vehicle), the terminal devices all may be considered as vehicle-mounted terminal devices. The vehicle-mounted terminal devices are also referred to as, for example, on-board units (on-board units, OBUs).

In embodiments of this application, the terminal device may further include a relay (relay). Alternatively, it can be understood that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In this embodiment of this application, the chip system may include a chip, or may include a chip and another discrete component. In the technical solutions provided in embodiments of this application, an example in which the apparatus configured to implement the function of the terminal device is a terminal device is used to describe the technical solutions provided in embodiments of this application.

(2) Network device: A network device includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to mutually convert a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (evolved NodeB, eNB or eNodeB) in an LTE system or a long term evolution-advanced (long term evolution-advanced, LTE-A) system, or may include a next-generation NodeB (next-generation NodeB, gNB) in a 5G NR system (which is also referred to as an NR system for short), or may include a CU and a DU in a cloud radio access network (cloud radio access network, Cloud RAN) system. This is not limited in embodiments of this application.

The network device may further include a core network device. The core network device includes, for example, a mobility management entity (mobility management entity, MME) in a 4G system, or an access and mobility management function (access and mobility management function, AMF) or a user plane function (user plane function, UPF) in a 5G system.

In embodiments of this application, an apparatus configured to implement a function of a network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used to describe the technical solutions provided in embodiments of this application.

(3) Terms "system" and "network" may be used interchangeably in embodiments of this application. "At least one" means one or more, and "a plurality of' means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first key and a second key are merely used to distinguish between different keys, but do not indicate that data volumes, content, priorities, importance degrees, or the like of the two keys are different.

The foregoing describes concepts of some terms in embodiments of this application. The following describes technical features in embodiments of this application.

Transmission of wireless communication is classified into user plane transmission and control plane transmission. User plane transmission is mainly transmission of data, and control plane transmission is mainly transmission of signaling. In a wireless communication process, to ensure security of the communication process, both a transmitting end and a receiving end need to perform security processing on data and signaling. For example, the transmitting end encrypts data, and correspondingly, the receiving end decrypts the data, to prevent the data from being read by a third party. The transmitting end performs integrity protection on the data, and correspondingly, the receiving end performs integrity verification on the data, to prevent the data from being tampered with by a third party.

In 5G communication, user plane transmission and control plane transmission may be separated, to avoid impact on each other.

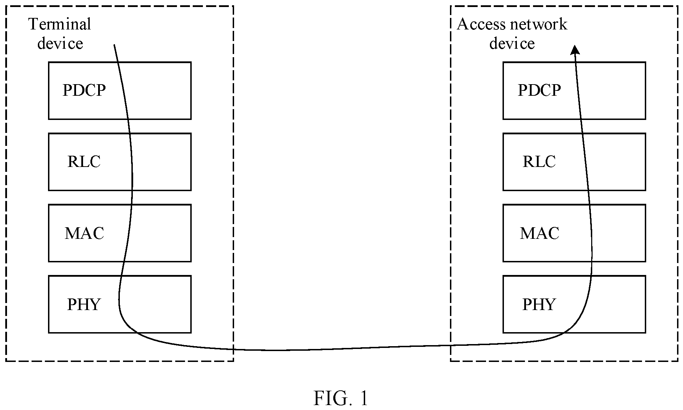

FIG. 1 is a schematic diagram of user plane air interface protocol stacks of a terminal device and an access network device. Uplink transmission is used as an example. Data or signaling first arrives at a packet data convergence protocol (packet data convergence protocol, PDCP) layer of the terminal device, is processed by the PDCP layer, and then transmitted to a radio link control (radio link control, RLC) layer and a media access control (media access control, MAC) layer. After corresponding processing, the data or signaling is sent from a physical (PHY) layer to a physical layer of the access network device. The physical layer of the access network device delivers the received data to a MAC layer of the access network device. After corresponding processing at the MAC layer, the data reaches an RLC layer of the access network device. After corresponding processing at the RLC layer, the data arrives at a PDCP layer of the access network device. A transmission channel including one PDCP and one RLC may be referred to as a radio bearer. Data transmitted on each radio bearer needs to be processed at each layer, and each layer has a corresponding functional entity to perform a corresponding function, for example, a PDCP entity at a PDCP layer or an RLC entity at an RLC layer. Each RLC entity corresponds to one logical channel, and one MAC entity corresponds to a plurality of logical channels. Data on different logical channels may be multiplexed at a MAC layer, to be specific, multiplexed into a same data block for transmission. In another user plane protocol stack architecture based on the protocol stack shown in FIG. 1, there is a service data adaptation protocol (service data adaptation protocol, SDAP) layer above the PDCP layers of the terminal device and the access network device, to process mapping from a quality of service (quality of service, QoS) flow to a data radio bearer (data radio bearer, DRB). In addition, a difference between a control plane protocol stack and a user plane protocol stack lies in that, in the control plane protocol stack based on the protocol stack shown in FIG. 1, there is a radio resource control (radio resource control, RRC) layer above the PDCP layers of the terminal device and the access network device, to process control plane signaling.

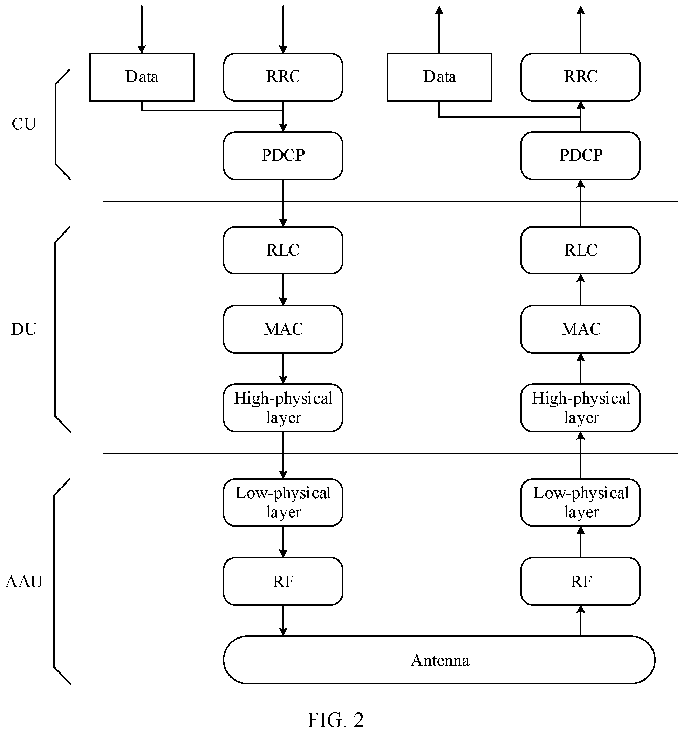

A CU-DU separated base station architecture is a new base station architecture introduced to a 5G network. In a 4G architecture, each base station is independently deployed and separately connected to a 4G core network. However, in a 5G architecture, DU parts of different base stations are independently deployed, but CU parts of different base stations may be centrally deployed. In other words, a plurality of base stations may share one CU, where the CU is connected to the core network, and the DU is connected to the CU through an Fl interface. However, the CU and the DU are centralized in one device, and the device is located on a base station side. As shown in FIG. 2, from a perspective of a protocol stack structure, in a 5G base station, a low-physical layer (low-PHY) in an indoor baseband unit (baseband unit, BBU) of an original 4G base station is moved downwards to an active antenna unit (active antenna unit, AAU) for processing, where the AAU further includes a radio frequency unit (radio frequency, RF) and the like; and a physical layer (for example, referred to as a high-physical layer high-PHY), a MAC layer, an RLC layer, and the like that have a high real-time requirement are placed in a DU for processing, and a PDCP layer, an SDAP layer, an RRC layer, and the like that do not have a high real-time requirement are placed in the CU for processing.

Currently, security processing at an access stratum is performed at a PDCP layer. To be specific, a transmitting end performs security processing (for example, encryption or integrity protection) on data or signaling at a PDCP layer, and a receiving end also performs corresponding security processing (for example, decryption or integrity verification) on the data or the signaling at a PDCP layer. The transmitting end and the receiving end need to use a same key for security processing. For the terminal device, the key is derived by the terminal device based on a built-in root key of the terminal device. For the base station, the key is derived from a key sent by a core network device to the base station. Therefore, the terminal device and the base station may perform security processing on the data and the signaling by using the same key.

In addition, embodiments of this application further relate to a cell handover procedure. The following describes a process of the cell handover procedure. There are two cell handover manners. One manner is to implement handover based on an Xn interface between base stations, and the other manner is to implement handover based on an N2 interface between a base station and a core network device. If there is no Xn interface between the base stations, handover may be implemented based on the N2 interface between the base station and the core network device. Alternatively, if there is the Xn interface between the base stations, handover may be implemented based on the Xn interface between the base stations, or handover may be implemented based on the N2 interface between the base station and the core network device. The following describes the two handover processes.

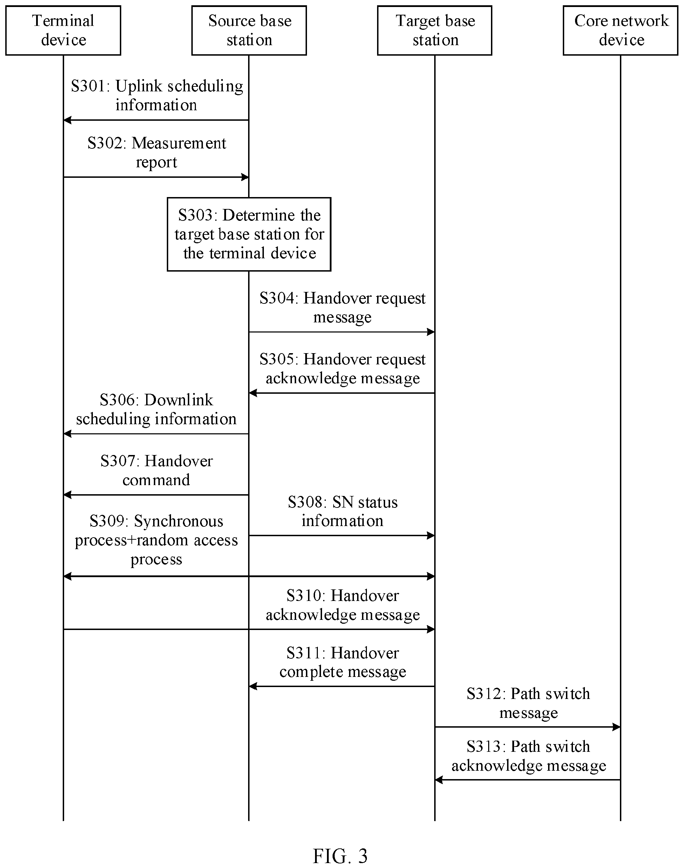

A cross-base station cell handover process based on the Xn interface between the base stations is a handover process initiated by a source (source) base station. A main process of the cross-base station cell handover process is as follows: The source base station determines, based on a measurement report reported by a terminal device, to perform cell handover on the terminal device, and initiates a handover request to a target base station. After receiving a handover acknowledgment from the target base station, the source base station sends a handover command to the terminal device. After receiving the handover command, the terminal device stops sending uplink data or downlink data to the source base station, and the terminal device starts to synchronize with the target base station, and initiates a random access process to the target base station. After sending the handover command to the terminal device, the source base station stops uplink data or downlink data transmission with the terminal device, and sends, to the target base station, data that is not successfully sent. After successfully accessing the target base station, the terminal device starts to transmit uplink data or downlink data to the target base station. FIG. 3 is a flowchart of the process.

S301: A source base station sends uplink scheduling information to a terminal device, and the terminal device receives the uplink scheduling information from the source base station.

The uplink scheduling information may be for scheduling a corresponding uplink resource for the terminal device.

S302: In a handover preparation phase, the terminal device in an RRC connected mode sends, based on a measurement reporting trigger criterion configured by the base station, a measurement report (measurement report, MR) on the uplink resource scheduled in S30 1.

S303: When the terminal device meets a handover condition, the source base station determines, based on the measurement report of the terminal device and a radio resource management (radio resource management, RRM) algorithm, a target base station for the terminal device, in other words, determines a target cell for the terminal device, or determines to hand over the terminal device to the target cell (or the target base station).

S304: The source base station sends a handover request (handover request) message to the target base station, and the target base station receives the handover request message from the source base station.

The source base station may send context (UE context) information of the terminal device to the target base station along with the handover request message.

S305: The target base station sends a handover request acknowledge (handover request ACK) message to the source base station, and the source base station receives the handover request acknowledge message from the target base station.

The target gNB prepares for the terminal device to be handed over to the target gNB, and allocates a cell radio network temporary identifier (cell radio network temporary identifier, C-RNTI) and another parameter to the terminal device. The target base station may return, to the source base station in the handover request acknowledge message, the C-RNTI and the another parameter that are allocated to the terminal device.

In addition, after receiving the handover request acknowledge message, the source base station prepares to forward data of the terminal device to the target base station. The data of the terminal device may include downlink data to be sent to the terminal device, uplink data received from the terminal device, or the like.

S306: The source base station sends downlink scheduling information to the terminal device, and the terminal device receives the downlink scheduling information from the source base station.

The downlink scheduling information may be for scheduling a corresponding downlink resource for the terminal device.

S307: The source base station sends a handover command (handover command) to the terminal device, and the terminal device receives the handover command from the source base station.

The handover command may include the following information: the C-RNTI in S305, a system information block (system information block, SIB) of the target base station, configuration information of the terminal device, and the like. The SIB of the target base station includes, for example, a random access resource used by the terminal device to perform random access to the target base station, and may further include some other configuration information. The configuration information of the terminal device includes, for example, a MAC layer configuration, an RLC configuration, or a PDCP configuration of the terminal device.

After receiving the handover command, the terminal device stops uplink data or downlink data transmission with the source base station, and synchronizes with the target base station.

S308: The source base station sends sequence number (sequence number, SN) status information to the target base station, and the target base station receives the SN status information from the source base station.

The SN status information may include uplink SN status information, or include downlink SN status information, or include the uplink SN status information and the downlink SN status information. For example, the uplink SN status information is an uplink SN. The uplink SN may be a sequence number of a data packet that is received by the source base station from the terminal device and that has a largest sequence number, or 1 plus the sequence number of the data packet that is received by the source base station from the terminal device and that has the largest sequence number. For example, the downlink SN status information is a downlink SN. The downlink SN may be a sequence number of a data packet that is to be sent by the source base station to the terminal device and that has a largest sequence number, or 1 plus the sequence number of the data packet that is to be sent by the source base station to the terminal device and that has the largest sequence number.

Optionally, the source base station may perform data forwarding (data forwarding) to the target base station. To be specific, the source base station forwards, to the target base station, buffered uplink data that is from the terminal device and/or buffered downlink data that corresponds to the terminal device and that is from a core network device (for example, a UPF). Correspondingly, the target base station receives the data from the source base station. This step is not mandatory and is indicated by dotted lines.

S309: After disconnecting data transmission from the source base station, the terminal device starts a downlink synchronization process with the target base station, and then initiates a random access process to the target base station to obtain uplink timing, an uplink resource, and the like.

The target base station sends an uplink timing advance (timing advance, TA) to the terminal device, and indicates, to the terminal device, a resource allocated to the terminal device. The resource herein is mainly used in a random access process. For example, the terminal device may send a third message (Msg3) that is in the random access process to the target base station by using the resource. The information sent by the target base station to the terminal device may be used by the terminal device to send an RRC connection reconfiguration complete message to the target base station, to indicate that cell handover is completed.

S3 10: The terminal device sends handover acknowledge information to the target base station, and the target base station receives the handover acknowledge information from the terminal device. The handover acknowledge information indicates that the handover is completed. The handover acknowledge information may be, for example, carried in the RRC connection reconfiguration complete message.

S311: The target base station sends a handover complete message to the source base station, and the source base station receives the handover complete message from the target base station.

After receiving the handover complete message, the source base station may release the context information and the like of the terminal device.

In addition, the target base station may perform S312. To be specific, the target base station sends a path switch (path switch) message to the core network device, and the core network device receives the path switch message from the target base station. The path switch message is used to: notify the core network device to update information about a destination base station for data forwarding, and change an address of the destination base station corresponding to the terminal device from an address of the source base station to an address of the target base station. After receiving the path switch message, the core network device may change the address of the destination base station corresponding to the terminal device from the address of the source base station to the address of the target base station, so that the core network device can subsequently send the data of the terminal device to the target base station. Then, the core network device may perform S313. To be specific, the core network device sends a path switch acknowledge (path switch ACK) message to the target base station, and the target base station receives the path switch acknowledge message from the core network device. The path switch acknowledge message indicates that the information about the destination base station for data forwarding is updated.

A cross-base station cell handover process based on an N2 interface between a base station and a core network device is also a handover process initiated by a source base station. A main difference between this process and a cross-base station cell handover process based on an Xn interface between base stations is as follows: In this process, the source base station and a target base station cannot directly communicate with each other, but the core network device needs to perform forwarding. Other steps are the same as those in the procedure shown in FIG. 3. Therefore, details are not described again.

As described above, regardless of the cell handover procedure or a non-cell handover procedure, data or signaling security processing is performed at PDCP layers of a terminal device and a base station. Security processing at an access stratum includes security processing of control plane signaling and security processing of user plane data. Currently, for the base station, the two types of security processing at the access stratum are both performed on a RAN side, and processes of the two types of security processing cannot be isolated from each other. Consequently, an entire security processing process is risky.

In view of this, the technical solutions in embodiments of this application are provided. In embodiments of this application, based on an access network device architecture in which a user plane is separated from a control plane, a control plane entity of a first access network device and a user plane entity of the first access network device are different network entities, so that a control plane processing process and a user plane processing process that are of the first access network device can be isolated from each other, thereby reducing a risk of the security processing process. Specifically, a second key for performing security processing on control plane signaling is sent to the control plane entity, and a third key for performing security processing on user plane data is sent to the user plane entity. In this way, the control plane entity and the user plane entity cannot obtain the key of each other, and therefore cannot crack transmission content of each other. In this way, the control plane processing process and the user plane processing process that are of the first access network device are isolated from each other, and a security risk of an entire system is reduced.

The technical solutions provided in embodiments of this application may be applied to a 4th generation (4th generation, 4G) mobile communication technology system, for example, an LTE system, or may be applied to a 5G system, for example, an NR system, or may be applied to a next-generation mobile communication system or another similar communication system, provided that one entity can initiate paging to another entity. This is not specifically limited. In addition, an air interface communication process between a network device and a terminal device is used as an example in a description process of embodiments of this application. Actually, the technical solutions provided in embodiments of this application may also be applied to a sidelink (sidelink, SL), provided that one terminal device can initiate paging to another terminal device. For example, the technical solutions provided in embodiments of this application may be applied to a device-to-device (device-to-device, D2D) scenario, an NR D2D scenario, or an LTE D2D scenario; or may be applied to a vehicle-to-everything (vehicle-to-everything, V2X) scenario, an NR V2X scenario, or an LTE V2X scenario, for example, may be applied to an internet of vehicles, such as V2X, LTE-V, and vehicle-to-vehicle (vehicle-to-vehicle, V2V), or may be used in fields such as intelligent driving and intelligent connected vehicles.

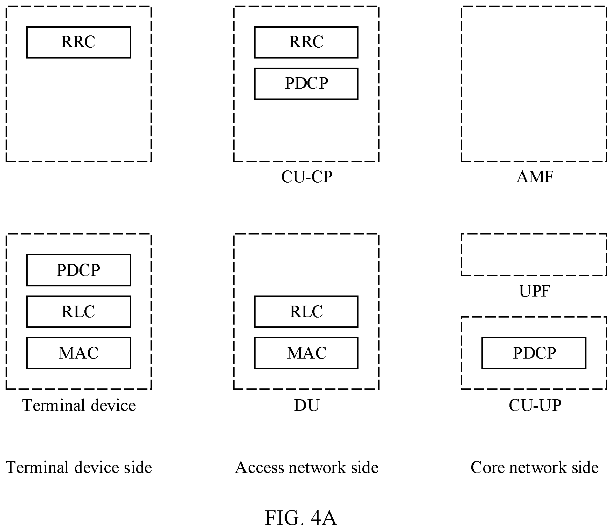

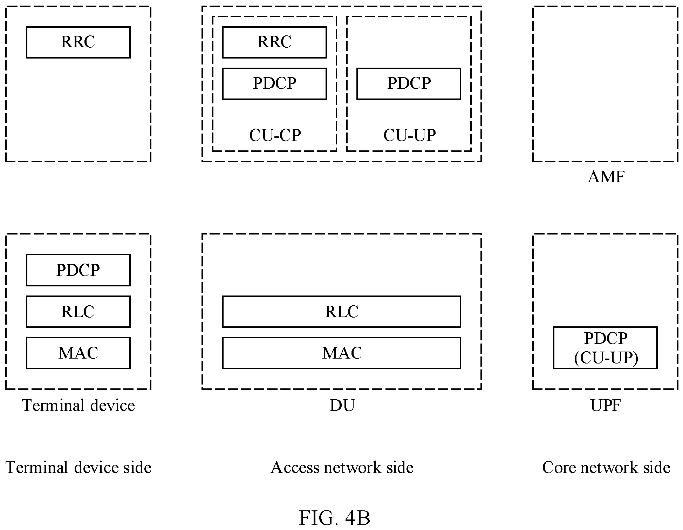

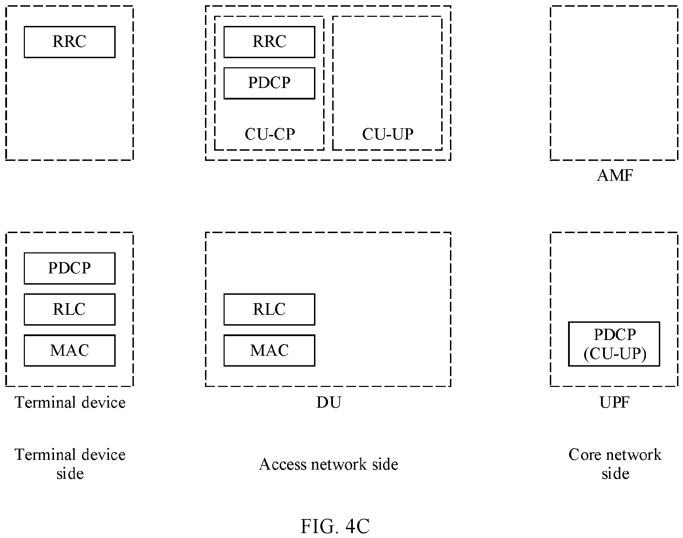

FIG. 4A, FIG. 4B, and FIG. 4C show three application scenarios of embodiments of this application. In FIG. 4A, FIG. 4B, or FIG. 4C, an access network device serves a terminal device in a wireless transmission manner.

A core network device in FIG. 4A, FIG. 4B, or FIG. 4C includes, for example, a UPF, and certainly may further include another core network device such as an AMF, which is not drawn one by one herein. In addition, FIG. 4A, FIG. 4B, and FIG. 4C further provide protocol stack architectures provided in embodiments of this application. A protocol stack on a terminal device side may include a MAC layer, an RLC layer, a PDCP layer, an SDAP layer, an RRC layer, and the like. A DU on a base station side may include a MAC layer and an RLC layer. A CU on a base station side may be classified into a CU-control plane (control plane, CP) and a CU-user plane (user plane, UP). In an implementation, as shown in FIG. 4A, the CU-CP is located on the base station side, the CU-UP is moved to a core network side, and the CU-UP is independently deployed on the core network side. In another implementation, as shown in FIG. 4B, the CU-CP and the CU-UP are located on the base station side, some functions of a PDCP layer are retained in the CU-UP, and other functions (for example, a security processing function) of the PDCP layer of the CU-UP are deployed in a core network device, for example, may be deployed in a UPF. It may be considered that the CU-UP further includes the PDCP layer, but functions implemented by the PDCP layer are limited. In addition, in this manner, if the CU-UP further includes an SDAP layer, the SDAP layer may be still retained in the CU-UP on the base station side, or may be moved to the UPF. In still another implementation, as shown in FIG. 4C, the CU-CP and the CU-UP are located on the base station side, and all functions (for example, including a security processing function) of a PDCP layer of the CU-UP are deployed in a core network device, for example, may be deployed in a UPF. It may be considered that the CU-UP no longer includes the PDCP layer. In addition, in the implementation shown in FIG. 4B or FIG. 4C, if the CU-UP further includes an SDAP layer, the SDAP layer may be still retained in the CU-UP on the base station side, or may be deployed in the UPF instead. Regardless of which implementation is used, security processing processes of the control plane and the user plane can be isolated from each other, thereby reducing a risk of security processing.

The access network device in FIG. 4A, FIG. 4B, or FIG. 4C is, for example, a base station. The base station corresponds to different devices in different systems. For example, in a 4G system, the base station may correspond to a 4G base station, for example, an eNB; in a 5G system, the base station corresponds to a 5G base station, for example, a gNB. Certainly, the technical solutions provided in embodiments of this application may also be applied to a future mobile communication system. Therefore, the access network device in FIG. 4A, FIG. 4B, or FIG. 4C may also correspond to an access network device in the future mobile communication system. In FIG. 4A, FIG. 4B, or FIG. 4C, an example in which the access network device is a base station is used. Actually, with reference to the foregoing descriptions, the access network device may alternatively be a device such as an RSU. In addition, an example in which the terminal device in FIG. 4A, FIG. 4B, or FIG. 4C is a mobile phone is used. Actually, it can be learned from the foregoing descriptions of the terminal device that the terminal device in embodiments of this application is not limited to a mobile phone.

With reference to the accompanying drawings, the following describes methods provided in embodiments of this application.

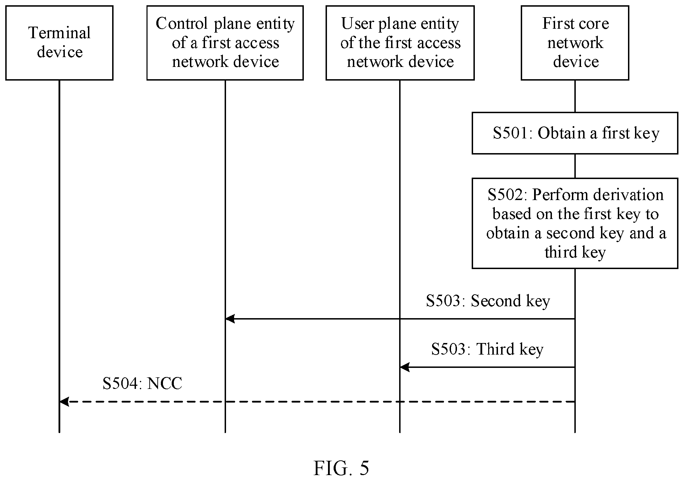

An embodiment of this application provides the first key obtaining method. FIG. 5 is a flowchart of the method. In the following description process, an example in which the method is applied to the network architecture shown in FIG. 4A, FIG. 4B, or FIG. 4C is used.

For ease of description, in the following, an example in which the method is performed by a network device and a terminal device is used. Because an example in which this embodiment is applied to the network architecture shown in FIG. 4A, FIG. 4B, or FIG. 4C is used, a first core network device described below is, for example, the AMF in the network architecture shown in FIG. 4A, FIG. 4B, or FIG. 4C, or may be a core network device other than the AMF and the UPF; a first access network device described below may be the access network device in the network architecture shown in FIG. 4A, FIG. 4B, or FIG. 4C; and a terminal device described below may be the terminal device in the network architecture shown in FIG. 4A, FIG. 4B, or FIG. 4C.

S501: The first core network device obtains a first key.

The first key may be used to obtain, through derivation, a key used by the first access network device to perform security processing on access stratum control plane signaling, or used to obtain, through derivation, a key used by the first access network device to perform security processing on access stratum user plane data, or used to obtain, through derivation, the key used by the first access network device to perform security processing on the access stratum control plane signaling and used to obtain, through derivation, the key used by the first access network device to perform security processing on the access stratum user plane data.

In this embodiment of this application, the performing security processing on the access stratum control plane signaling may include one or more of the following processing manners: performing integrity protection, integrity verification, encryption, or decryption on the access stratum control plane signaling. For example, if a control plane entity of the first access network device is a transmitting end of signaling, the control plane entity of the first access network device may perform integrity protection, encryption, or integrity protection and encryption on the signaling. For another example, if a control plane entity of the first access network device is a receiving end of signaling, the control plane entity of the first access network device may perform integrity verification, decryption, or integrity verification and decryption on the signaling.

Similarly, in this embodiment of this application, the performing security processing on the access stratum user plane data may include one or more of the following processing manners: performing integrity protection, integrity verification, encryption, or decryption on the access stratum user plane data. For example, if a user plane entity of the first access network device is a transmitting end of a data packet, the user plane entity of the first access network device may perform integrity protection, encryption, or integrity protection and encryption on the data packet. For another example, if a user plane entity of the first access network device is a receiving end of a data packet, the user plane entity of the first access network device may perform integrity verification, decryption, or integrity verification and decryption on the data packet.

In an implementation, the first key may be an intermediate key that is of the first access network device and that corresponds to the terminal device. This may be understood as that when communicating with different terminal devices, the first access network device may perform derivation based on different intermediate keys to obtain keys that correspond to the different terminal devices and that are for performing security processing on the access stratum control plane signaling and the user plane data. For example, the first key may include *K_{gnb}* and/or NH.

On a core network side, a root key corresponding to each terminal device may be prestored, and then at least one core network device may perform a step-by-step derivation process based on the root key, to obtain keys required by different devices or required in different security processes. A core network device that can obtain, through derivation based on the root key, a key used by the core network device includes but is not limited to one or more of an authentication credential repository and processing function (authentication credential repository and processing function, ARPF), an authentication server function (authentication server function, AUSF) entity, or a security anchor function (security anchor function, SEAF) entity, and certainly may further include another core network device, for example, an AMF. For example, the first core network device can obtain a root key corresponding to the terminal device, where for example, the root key is referred to as a first root key. The first core network device may perform derivation based on the first root key, or the first core network device may perform further derivation based on a key obtained through derivation based on the first root key, to obtain a key used by the first core network device, where for example, the key is referred to as a fourth key. For example, if the first core network device is an AMF, the fourth key may be represented as K_{AMF}. Then, the first core network device may obtain the first key through derivation based on the fourth key, or may obtain another key through derivation based on the fourth key, for example, obtain a key for security processing in a non-access stratum communication process.

S502: The first core network device performs derivation based on the first key to obtain a second key and a third key.

In an optional implementation, the first core network device may perform one or more times of derivation based on the first key to obtain the second key and the third key. In another optional implementation, the first key may include the second key and the third key, in other words, the first core network device may obtain the second key and the third key without a need to perform derivation based on the first key. In this sense, S502 may alternatively be changed to: The first core network device determines the second key and the third key based on the first key. One determining manner is that the first core network device obtains the second key or the third key through derivation based on the first key. Another determining manner is that the first core network device obtains the second key and the third key by obtaining the first key (where the first key includes the second key and the third key). The second key is used to perform security processing on the access stratum control plane signaling, and the third key is used to perform security processing on the user plane data. A derivation process herein may be understood as a process in which a specific operation is performed based on at least one first parameter and a security algorithm to obtain at least one output parameter. For example, the first parameter is the first key, and the second key and/or the third key are/is obtained by performing the operation based on the security algorithm.

In an implementation, the second key may include a first sub-key, or include a second sub-key, or include the first sub-key and the second sub-key. For example, the first sub-key is represented as K_{RRCenc}, and may be used by an access network device to encrypt or decrypt the control plane signaling. For example, the second sub-key is represented as K_{RRCint}, and may be used by the access network device to perform integrity protection or integrity verification on the control plane signaling.

In embodiments of this application, integrity protection means that a transmitting end of a data packet uses information such as a key as an input parameter, performs operation processing on the data packet based on an integrity protection algorithm to obtain a first value, and then transmits the first value together with the data packet, to protect the data packet. Integrity verification means that a receiving end of a data packet uses information such as a key as an input parameter, and performs operation processing on the data packet based on an integrity protection algorithm to obtain a second value. The receiving end compares a first value with the second value. If the first value is consistent with the second value, integrity verification on the data packet succeeds. If the first value is inconsistent with the second value, integrity verification on the data packet fails. For example, the first value is a message authentication code (message authentication code, MAC)-I, the second value is an expected message authentication code (expected message authentication code, XMAC)-I, and I represents integrity (integrity). In other embodiments described below, the two concepts are not described in detail again.

In an implementation, the third key may include a third sub-key, or include a fourth sub-key, or include the third sub-key and the fourth sub-key. For example, the third sub-key is represented as K_{UPenc}, and may be used by the access network device to encrypt or decrypt the user plane data. For example, the fourth sub-key is represented as K_{UPint}, and may be used by the access network device to perform integrity protection or integrity verification on the user plane data.

S503: The first core network device sends the second key to the control plane entity of the first access network device, and sends the third key to the user plane entity of the first access network device.

The control plane entity of the first access network device is responsible for communication processing of the access stratum control plane signaling. In other words, the control plane entity of the first access network device may perform control plane communication with the terminal device, or the control plane entity of the first access network device may perform signaling communication with the terminal device. That is, the first access network device performs control plane signaling communication with the terminal device via the control plane entity of the first access network device. That the control plane entity of the first access network device performs control plane signaling communication with the terminal device may include that the control plane entity of the first access network device sends signaling to the terminal device, and may further include that the terminal device sends signaling to the control plane entity of the first access network device. The control plane signaling includes signaling radio bearer (signaling radio bearer, SRB) signaling, RRC signaling, or the like.

The user plane entity of the first access network device is responsible for user plane data communication with the terminal device. In other words, the user plane entity of the first access network device may perform user plane communication with the terminal device, or the control plane entity of the first access network device may perform data communication with the terminal device. That is, the first access network device performs user plane data communication with the terminal device via the user plane entity of the first access network device. That the user plane entity of the first access network device performs user plane data communication with the terminal device may include that the user plane entity of the first access network device sends data to the terminal device, and may further include that the terminal device sends data to the user plane entity of the first access network device. The user plane data includes an IP packet, an Ethernet packet, a data packet of another type, or the like from an upper layer.

After receiving the second key, the control plane entity of the first access network device may perform security processing on the control plane signaling of the terminal device by using the second key. For example, for the signaling to be sent by the control plane entity of the first access network device to the terminal device, the control plane entity of the first access network device may perform encryption, integrity protection, or the like on the signaling by using the second key; and for the signaling received by the control plane entity of the first access network device from the terminal device, the control plane entity of the first access network device may perform decryption, integrity verification, or the like on the signaling by using the second key.

Similarly, after receiving the third key, the user plane entity of the first access network device may perform security processing on the user plane data of the terminal device by using the third key. For example, for the data to be sent by the user plane entity of the first access network device to the terminal device, the user plane entity of the first access network device may perform encryption, integrity protection, or the like on the data by using the third key; and for the data received by the user plane entity of the first access network device from the terminal device, the user plane entity of the first access network device may perform decryption, integrity verification, or the like on the data by using the third key.

Preferably, in embodiments of this application, the control plane entity of the first access network device and the user plane entity of the first access network device are different network entities, so that a control plane processing process and a user plane processing process that are of the first access network device can be isolated. In embodiments of this application, the first core network device derives a key used by the first access network device, and the first access network device does not need to independently derive the key. After obtaining the second key and the third key through derivation, the first core network device may send the second key to the control plane entity of the first access network device, and send the third key to the user plane entity of the first access network device, so that the control plane entity of the first access network device cannot obtain the third key. In other words, the control plane entity of the first access network device neither senses user plane data processing nor accesses the third key of a user plane, so that a security processing risk can be effectively reduced.

In addition, an access network device is provided by an equipment vendor, deployed by an operator, and generally deployed outdoors. Therefore, if the access network device can read user data, a risk is caused to data security. According to the foregoing security processing manner, although security processing of the user plane data and security processing of the control plane signaling are isolated from each other, both are still performed on an access network side, and user data still has a security risk.

Therefore, in an optional implementation, in this embodiment of this application, the control plane entity of the first access network device may be located on the access network side, and the user plane entity of the first access network device may be located on the core network side. Alternatively, a CU-CP and a CU-UP are still located in a CU on a side of the first access network device, some functions of a PDCP layer are retained in the CU-UP, and other functions (for example, a security processing function) of the PDCP layer of the CU-UP are deployed in a core network device, for example, may be deployed in a UPF. In this case, the control plane entity of the first access network device is, for example, the CU-CP, and the user plane entity of the first access network device is, for example, the PDCP layer deployed in the core network device (for example, the UPF) (in other words, the other functions of the PDCP layer of the CU-UP can be implemented). Alternatively, both a CU-CP and a CU-UP are still located in a CU on a side of the first access network device, but all functions (for example, including a security processing function) of a PDCP layer of the CU-UP are deployed in a core network device (for example, a UPF). In this case, the control plane entity of the first access network device is, for example, the CU-CP, and the user plane entity of the first access network device is, for example, the PDCP layer that is in the core network device (for example, the UPF) (in other words, all the functions of the PDCP layer of the CU-UP can be implemented). Generally, access stratum control signaling is for assisting transmission of the user plane data, and what a user really cares about is the user plane data. Therefore, security processing of the user plane data is performed on the core network side, so that security of user plane data processing can be first ensured. In addition, it can be further ensured, by isolating a user plane security processing process from a control plane security processing process, that the access network side cannot obtain the key for user plane data security processing, and a security risk of the user plane data can be significantly reduced.

For example, the first core network device is an AMF, the control plane entity of the first access network device is a CU-CP, and the user plane entity of the first access network device is a CU-UP. The AMF may send the second key to the CU-CP through an interface between the AMF and the CU-CP. The AMF may send the third key to the CU-UP on the core network side through an interface between the AMF and the CU-UP, or may forward the third key to the CU-UP via the UPF or another core network device.

As described above, an access network device is provided by an equipment vendor, deployed by an operator, and generally deployed outdoors. Therefore, if the access network device can read user data, a risk is caused to data security. Therefore, in this embodiment of this application, the control plane entity of the first access network device may be located on the access network side, and the user plane entity of the first access network device may be located on the core network side. Generally, the access stratum control signaling is for assisting transmission of the user plane data, and what the user really cares about is the user plane data. Therefore, security processing of the user plane data is performed on the core network side, so that security of user plane data processing can be first ensured. In addition, it can be further ensured, by isolating the user plane security processing process from the control plane security processing process, that the access network side cannot obtain the key for user plane data security processing, and the security risk of the user plane data can be significantly reduced.

S504: The first core network device sends a next hop chaining counter (next hop chaining counter, NCC) to the terminal device, and the terminal device receives the NCC from the first core network device.

The terminal device may determine a to-be-used key based on the NCC, to ensure consistency with a key used on a network side. The NCC has a counting function, and different NCC values correspond to different key derivation processes or different quantities of key derivation times. For example, the NCC may indicate a quantity of derivation times for deriving the first key by the first core network device, or the NCC may indicate a derivation track or a derivation process record for deriving the first key by the first core network device. The terminal device is equipped with a built-in root key of the terminal device, where for example, the root key is referred to as a second root key. The second root key and the first root key may be a same root key, or may be different root keys. The terminal device can obtain, through derivation based on the second root key in a derivation manner that is the same as that of the core network device, the key used by the terminal device. After obtaining the NCC, the terminal device may determine the derivation manner of the core network device based on the indication of the NCC, so that the key used by the terminal device and the key used by the first access network device are consistent. For example, if the NCC indicates that the quantity of derivation times is n, the terminal device obtains the first key through derivation for n times, where n is a positive integer, and the terminal device may further obtain the second key and the third key. For another example, if the NCC indicates the derivation track or the derivation process record, the terminal device may obtain the first key through derivation based on a same track or a same derivation process, to further obtain the second key and the third key.

Alternatively, the first core network device may not send the NCC to the terminal device. For example, if the quantity of derivation times (or the derivation track or the derivation record) of the first core network device is specified in a protocol, or the first core network device has notified the terminal device in advance, the first core network device may not send the NCC to the terminal device. Therefore, S504 is an optional step, and is represented by a dashed line in FIG. 5.

Security processing at an access stratum includes security processing of the control plane signaling and security processing of the user plane data. Currently, for a base station, the two types of security processing at the access stratum are both performed on a RAN side. Uplink transmission is used as an example. After security processing (for example, encryption or integrity protection) is performed on data at a PDCP layer on a terminal device side, the data is transmitted to a DU on the access network side, processed by the DU, and then transmitted to the CU-UP on the access network side. Corresponding security processing (for example, decryption or integrity verification) is performed on the data at the PDCP layer of the CU-UP, and then the data is transmitted to the UPF on the core network side. Signaling is transmitted from an RRC layer of the terminal device to the PDCP layer of the terminal device. After security processing (for example, encryption or integrity protection) is performed on the signaling at the PDCP layer of the terminal device, the signaling is transmitted to the DU on the access network side, processed by the DU, and then transmitted to the CU-CP on the access network side. After corresponding security processing (for example, decryption or integrity verification) is performed on the signaling at a PDCP layer of the CU-CP, the signaling is delivered to an RRC layer of the CU-CP for parsing. The CU-CP and the CU-UP are located in one entity, and the entity is located on an access network device side. It can be learned that, for the base station, the two types of security processing at the access stratum are both performed on the RAN side, and processes of the two types of security processing cannot be isolated from each other. Consequently, an entire security processing process is risky. In addition, an access network device is provided by an equipment vendor, deployed by an operator, and generally deployed outdoors. Therefore, if the access network device can read user data, a risk is caused to data security. Currently, both the CU-CP and the CU-UP are located on the access network side, and user data still has a security risk.

However, in this embodiment of this application, the control plane entity and the user plane entity that are of the first access network device are two network entities, the control plane entity is located on the access network side, and the user plane entity is located on the core network side. In this way, data security processing is performed on the core network side. Uplink transmission is used as an example. After security processing (for example, encryption or integrity protection) is performed on data at a PDCP layer on a terminal device side, the data is transmitted to a DU on the access network side, processed by the DU, and then transmitted to the user plane entity on the core network side. Corresponding security processing (for example, decryption or integrity verification) is performed on the data at a PDCP layer of the user plane entity, and then the data is transmitted to the UPF on the core network side. Signaling is transmitted from an RRC layer of the terminal device to the PDCP layer of the terminal device. After security processing (for example, encryption or integrity protection) is performed on the signaling at the PDCP layer of the terminal device, the signaling is transmitted to the DU on the access network side, processed by the DU, and then transmitted to the control plane entity on the access network side. After corresponding security processing (for example, decryption or integrity verification) is performed on the signaling at a PDCP layer of the control plane entity, the signaling is delivered to an RRC layer of the control plane entity for parsing. It can be learned that according to the method provided in this embodiment of this application, security processing of the user plane data is performed in the user plane entity, security processing of the control plane signaling is performed in the control plane entity, and the user plane entity and the control plane entity are located in different entities, so that the security processing processes of the user plane data and the control plane signaling can be isolated, thereby improving security of the user plane data. In addition, generally, the access stratum control signaling is for assisting transmission of the user plane data, and what the user really cares about is the user plane data. Therefore, security processing of the user plane data is performed on the core network side, so that security of user plane data processing can be first ensured. In addition, it can be further ensured, by isolating the user plane security processing process from the control plane security processing process, that the access network side cannot obtain the key for user plane data security processing, and the security risk of the user plane data can be significantly reduced.

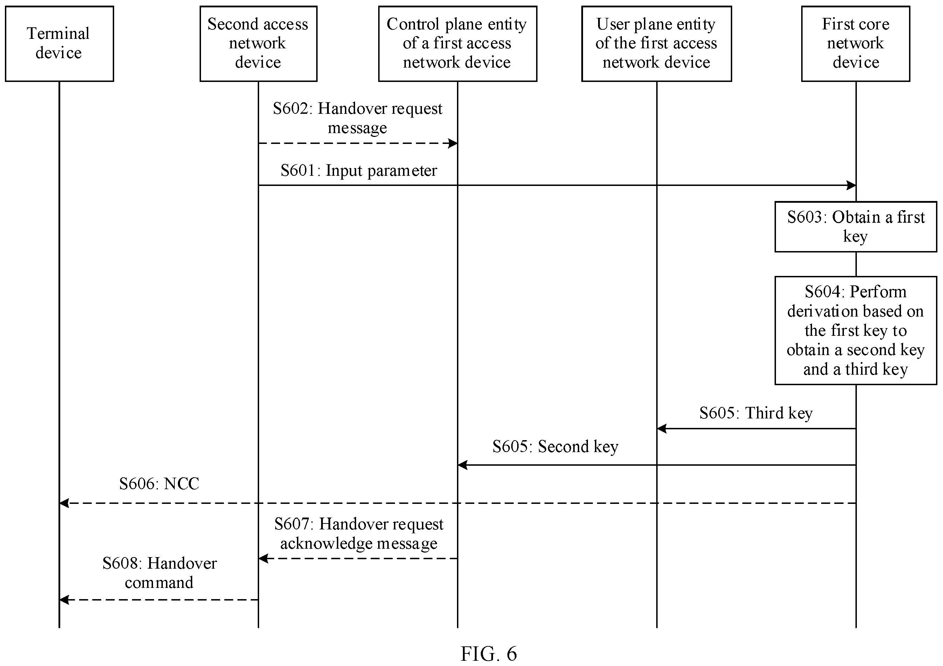

The embodiment shown in FIG. 5 relates to a non-cell handover procedure. In a cell handover procedure, the solution provided in this embodiment of this application can also improve data security. The following describes the second key obtaining method provided in an embodiment of this application. According to the method, data security can be improved in a cell handover scenario. FIG. 6 is a flowchart of the method. In the following description process, an example in which the method is applied to the network architecture shown in FIG. 4A, FIG. 4B, or FIG. 4C is used. In addition, a cell handover procedure in this embodiment of this application is a cross-base station cell handover procedure based on an Xn interface between base stations.

For ease of description, in the following, an example in which the method is performed by a network device and a terminal device is used. Because an example in which this embodiment is applied to the network architecture shown in FIG. 4A, FIG. 4B, or FIG. 4C is used, a first core network device described below is, for example, the AMF in the network architecture shown in FIG. 4A, FIG. 4B, or FIG. 4C, or may be a core network device other than the AMF and the UPF; a first access network device described below may be the access network device in the network architecture shown in FIG. 4A, FIG. 4B, or FIG. 4C; a second access network device described below is not shown in FIG. 4A, FIG. 4B, or FIG. 4C, and is another access network device served by the first core network device in the network architecture; and a terminal device described below may be the terminal device in the network architecture shown in FIG. 4A, FIG. 4B, or FIG. 4C.

S601: The second access network device sends an input parameter to the first core network device, and the first core network device receives the input parameter from the second access network device, where the input parameter may be used to derive a first key (in other words, used to obtain a first key through derivation, and this may be understood as that a first core network can obtain the first key through derivation based on the input parameter), in other words, used to determine the first key.

For example, in this embodiment of this application, a new message, which is, for example, referred to as a first message, may be added to an original handover procedure. The first message may include the input parameter. In other words, the second access network device may send the input parameter to the first core network device based on the first message. The first message may be considered as a security-related message, or may be considered as a cell handover-related message.

The second access network device is a source access network device for cell handover of the terminal device, in other words, the second access network device is an access network device accessed by the terminal device before the terminal device performs cell handover. In addition, the first access network device is a target access network device for cell handover of the terminal device, in other words, the first access network device is an access network device accessed by the terminal device after the terminal device performs cell handover. That the input parameter is related to a target cell may be understood as that a key used by the first access network device to communicate with the terminal device after the handover needs to be obtained based on the input parameter.

In a cell handover process, the terminal device is handed over from a cell of the second access network device to a cell of the first access network device for communication. To protect independence of security processing processes between different access network devices, keys that are for security processing and that are used by the first access network device and the second access network device to communicate with the terminal device cannot be the same. For example, the key used by the first access network device to communicate with the terminal device may be derived based on a key that is of the second access network device and that corresponds to the terminal device. In embodiments of this application, considering a potential security risk on an access network device side, a core network device needs to perform a key derivation process. Therefore, the second access network device needs to send, to the first core network device, the input parameter required for deriving the key used by the first access network device, and the first core network device derives the key used by the first access network device, and sends, to the first access network device after derivation, the key used by the first access network device.

Because this embodiment of this application is a cross-base station cell handover procedure based on an Xn interface between base stations, in an optional implementation, before S601, S602 may be further performed: The second access network device sends a handover request message to the first access network device, and the first access network device receives the handover request message from the second access network device, where the handover request message is used to request to hand over the terminal device to the first access network device. For example, the second access network device may send the handover request message to a control plane entity of the first access network device, and the control plane entity of the first access network device receives the handover request message from the second access network device. For S602, refer to S304 in the procedure in FIG. 3. After S602 is performed, S601 in which the second access network device sends the input parameter to the first core network device may be performed.

For example, the input parameter may include a physical cell identity (physical cell identity, PCI) of the first cell, or include a frequency of the first cell, or include the PCI of the first cell and the frequency of the first cell. Alternatively, the input parameter may further include other information, provided that the input parameter can be for determining the first key. The frequency of the first cell is, for example, an absolute radio channel number (absolute radio frequency channel number, ARFCN) of the first cell. The first cell is a target cell of the terminal device, in other words, the first cell is the target cell for cell handover of the terminal device. It may be understood that, in embodiments of this application, that the terminal device performs cell handover means: The terminal device is to be hand over to the first cell. Therefore, the first cell is referred to as the target cell of the terminal device. The first cell is provided by the first access network device. Therefore, the first access network device is also referred to as the target access network device of the terminal device.

S603: The first core network device obtains the first key.

The first core network device obtains the input parameter, and may derive the first key based on the input parameter. S602 in FIG. 6 uses this example. Optionally, the first core network device may derive the first key based on the input parameter and the key of the second access network device. The key of the second access network device is, for example, an intermediate key that corresponds to the terminal device and that is of the second access network device, and is referred to as a fifth key. The first core network device may obtain the first key through derivation based on the fifth key and the input parameter. The fifth key is known to the first core network device. For example, with reference to the embodiment shown in FIG. 5, the first core network device may determine a second key and a third key for the first access network device, and before determining the second key and the third key, the first core network device first obtains the first key. Similarly, the first core network device may also obtain the fifth key of the second access network device, and the second access network device does not need to send the fifth key to the first core network device, but only needs to send the input parameter to the first core network device, to reduce signaling overheads.

For the first key, refer to related descriptions of S501 in the embodiment shown in FIG. 5.

S604: The first core network device performs derivation based on the first key to obtain the second key and the third key.

For more content of S604, refer to related descriptions of S502 in the embodiment shown in FIG. 5.

S605: The first core network device sends the second key to the control plane entity of the first access network device, and sends the third key to a user plane entity of the first access network device.

If the user plane entity of the first access network device is deployed in a core network device other than the first core network device, the first core network device may send the third key to the user plane entity of the first access network device. For example, if the first core network device is an AMF, and the user plane entity of the first access network device is deployed in a UPF, or the user plane entity of the first access network device is an independent device on a core network side, the AMF may send the third key to the user plane entity of the first access network device. Alternatively, if the user plane entity of the first access network device is deployed in the first core network device, the first core network device may not need to send the third key to the user plane entity of the first access network device, and the user plane entity of the first access network device may obtain the third key that is obtained by the first core network device through derivation.

For example, in this embodiment of this application, a new message, which is, for example, referred to as a second message, may be added to the original handover procedure, and the second message may include the second key. In other words, the first core network device may send the second key to the control plane entity of the first access network device based on the second message. The second message may be considered as a security-related message, or may be considered as a cell handover-related message.

In addition, in this embodiment of this application, another message, which is, for example, referred to as a third message, may be added to the original handover procedure. If the first core network device needs to send the third key to the user plane entity of the first access network device, the third message may include the third key. In other words, the first core network device may send the third key to the user plane entity of the first access network device based on the third message. The third message may be considered as a security-related message, or may be considered as a cell handover-related message.

If the first core network device needs to send the third key to the user plane entity of the first access network device, the first core network device may first send the third message and then send the second message, or may first send the second message and then send the third message, or may simultaneously send the third message and the second message.

For more content of S605, refer to related descriptions of S503 in the embodiment shown in FIG. 5.

S606: The first core network device sends an NCC to the terminal device, and the terminal device receives the NCC from the first core network device.

For example, the first core network device may send the NCC to the second access network device, and the second access network device forwards the NCC to the terminal device; or the first core network device may send the NCC to the first access network device, the first access network device forwards the NCC to the second access network device, and then the second access network device forwards the NCC to the terminal device. If the first core network device sends the NCC to the first access network device, the first core network device may send the NCC to the control plane entity of the first access network device, the control plane entity of the first access network device forwards the NCC to the second access network device, and then the second access network device forwards the NCC to the terminal device.

For more content of the NCC, refer to related descriptions of S504 in the embodiment shown in FIG. 5.

S607: The first access network device sends a handover request acknowledge message to the second access network device, and the second access network device receives the handover request acknowledge message from the first access network device.

Because the application scenario of this embodiment of this application is the cross-base station cell handover procedure based on the Xn interface between the base stations, the first access network device may further send the handover request acknowledge message to the second access network device. In addition, the control plane entity of the first access network device sends the handover request acknowledge message to the second access network device, and the second access network device receives the handover request acknowledge message from the control plane entity of the first access network device. For S607, refer to S305 in the procedure shown in FIG. 3.

S608: The second access network device sends a handover command to the terminal device, and the terminal device receives the handover command from the second access network device.

For S608, refer to S307 in the procedure shown in FIG. 3.

In addition, after S608 is performed, one or more steps in S308 to S313 in the procedure shown in FIG. 3 may be further performed, in other words, one or more steps related to cell handover may be further performed. This is not limited in this embodiment of this application.

S602 and S606 to S608 are all optional steps, are not necessarily performed, and are represented by dashed lines in FIG. 6.

In this embodiment of this application, the control plane entity and the user plane entity that are of the first access network device are two network entities, the control plane entity is located on an access network side, and the user plane entity is located on the core network side. In this way, data security processing is performed on the core network side. Uplink transmission is used as an example. After security processing (for example, encryption or integrity protection) is performed on data at a PDCP layer on a terminal device side, the data is transmitted to a DU on the access network side, processed by the DU, and then transmitted to the user plane entity on the core network side. Corresponding security processing (for example, decryption or integrity verification) is performed on the data at a PDCP layer of the user plane entity, and then the data is transmitted to the UPF on the core network side. Signaling is transmitted from an RRC layer of the terminal device to the PDCP layer of the terminal device. After security processing (for example, encryption or integrity protection) is performed on the signaling at the PDCP layer of the terminal device, the signaling is transmitted to the DU on the access network side, processed by the DU, and then transmitted to the control plane entity on the access network side. After corresponding security processing (for example, decryption or integrity verification) is performed on the signaling at a PDCP layer of the control plane entity, the signaling is delivered to an RRC layer of the control plane entity for parsing. It can be learned that according to the method provided in this embodiment of this application, security processing of the user plane data is performed in the user plane entity, security processing of the control plane signaling is performed in the control plane entity, and the user plane entity and the control plane entity are located in different entities, so that security processing processes of the user plane data and the control plane signaling can be isolated, thereby improving security of the user plane data. In addition, generally, access stratum control signaling is for assisting transmission of the user plane data, and what a user really cares about is the user plane data. Therefore, security processing of the user plane data is performed on the core network side, so that security of user plane data processing can be first ensured. In addition, it can be further ensured, by isolating the security processing process of the user plane from the security processing process of the control plane, that the access network side cannot obtain the key for user plane data security processing, and the security risk of the user plane data can be significantly reduced.

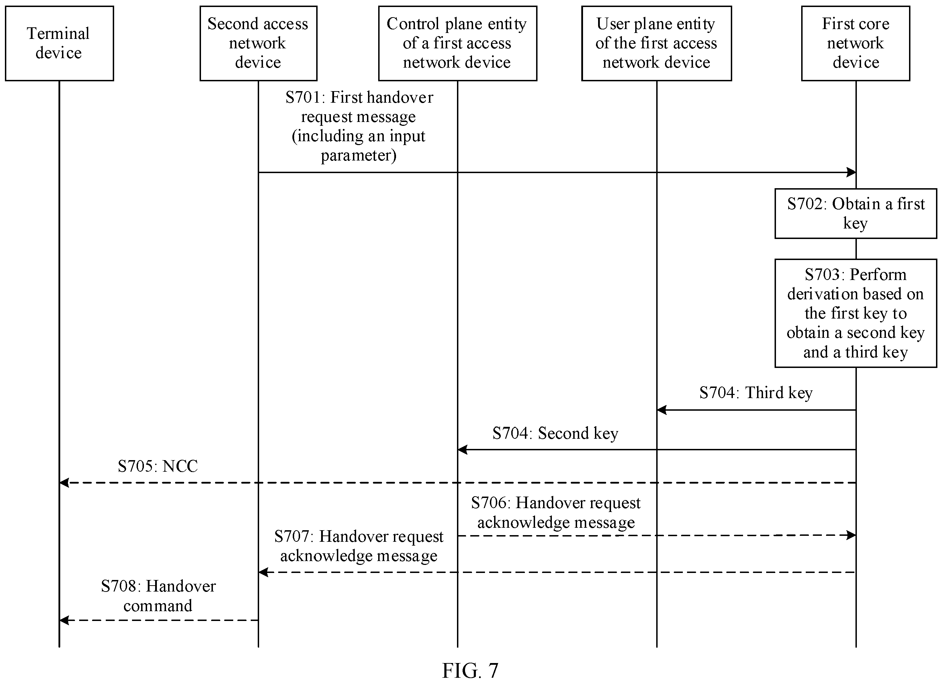

The application scenario of the embodiment shown in FIG. 6 is the cross-base station cell handover procedure based on the Xn interface between the base stations. In the following, an embodiment of this application provides the third key obtaining method. An application scenario of the method is a cross-base station cell handover process based on an N2 interface between a base station and a core network device. Data security can also be improved according to the method. FIG. 7 is a flowchart of the method. In the following description process, an example in which the method is applied to the network architecture shown in FIG. 4A, FIG. 4B, or FIG. 4C is used. In addition, a cell handover procedure in this embodiment of this application is a cross-base station cell handover procedure based on an Xn interface between base stations.

For ease of description, in the following, an example in which the method is performed by a network device and a terminal device is used. Because an example in which this embodiment is applied to the network architecture shown in FIG. 4A, FIG. 4B, or FIG. 4C is used, a first core network device described below is, for example, the AMF in the network architecture shown in FIG. 4A, FIG. 4B, or FIG. 4C, or may be a core network device other than the AMF and the UPF; a first access network device described below may be the access network device in the network architecture shown in FIG. 4A, FIG. 4B, or FIG. 4C; a second access network device described below is not shown in FIG. 4A, FIG. 4B, or FIG. 4C, and is another access network device served by the first core network device in the network architecture; and a terminal device described below may be the terminal device in the network architecture shown in FIG. 4A, FIG. 4B, or FIG. 4C.

S701: The second access network device sends an input parameter to the first core network device, and the first core network device receives the input parameter from the second access network device, where the input parameter may be used to derive a first key, in other words, used to determine the first key.

This embodiment of this application provides the cross-base station cell handover process based on the N2 interface between the base station and the core network device. In this case, when determining that the terminal device performs cell handover, the second access network device may send a handover request message to the first core network device, to forward the handover request message to the first access network device via the first core network device. Optionally, the handover request message sent by the second access network device to the first core network device may include the input parameter. This may be understood as that in S701, the second access network device sends the handover request message to the first core network device, where for example, the message is referred to as a first handover request message, and the first core network device receives the first handover request message from the second access network device, where the first handover request message includes the input parameter. S701 in FIG. 7 uses this example. In other words, in this embodiment of this application, no new message needs to be added, but the input parameter may be sent to the first core network device via the existing handover request message. This is more compatible with an existing solution, and signaling overheads can be reduced.

Alternatively, in this embodiment of this application, a new message, which is, for example, referred to as a first message, may be added to an original handover procedure. The first message may include the input parameter. In other words, the second access network device may send the input parameter to the first core network device based on the first message. The first message may be considered as a security-related message, or may be considered as a cell handover-related message. The second access network device may first send the first handover request message and then send the first message, or may first send the first message and then send the first handover request message, or may simultaneously send the first message and the first handover request message.

For more content such as the first access network device, the second access network device, and the input parameter, refer to related descriptions of S601 in the embodiment shown in FIG. 6.

S702: The first core network device obtains the first key.

The first core network device obtains the input parameter, and may derive the first key based on the input parameter. S702 in FIG. 7 uses this example. Optionally, the first core network device may derive the first key based on the input parameter and a key of the second access network device. The key of the second access network device is, for example, an intermediate key that corresponds to the terminal device and that is of the second access network device, and is referred to as a fifth key. The first core network device may obtain the first key through derivation based on the fifth key and the input parameter.

For more content such as the first key and the fifth key, refer to related descriptions of S603 in the embodiment shown in FIG. 6.

S703: The first core network device performs derivation based on the first key to obtain a second key and a third key.

For more content of S703, refer to related descriptions of S502 in the embodiment shown in FIG. 5.

S704: The first core network device sends the second key to a control plane entity of the first access network device, and sends the third key to a user plane entity of the first access network device.

This embodiment of this application provides the cross-base station cell handover process based on the N2 interface between the base station and the core network device. After receiving the first handover request message from the second access network device, the first core network device forwards the first handover request message to the first access network device in a conventional technology. This procedure may be used in embodiments of this application. For example, the first core network device may generate a second handover request message, where the second handover request message includes the second key, and the first core network device sends the second handover request message to the first access network device, so as to send the second key to the first access network device. For example, the first core network device may add the second key to the first handover request message, to obtain the second handover request message. In this manner, not only the first handover request message is forwarded to the first access network device, but also the second key is sent to the first access network device. In this way, the second key is sent to the first access network device without a need to newly add a message. This helps compatibility with an existing solution, and signaling overheads can be reduced. Because a handover request message is control plane signaling, when forwarding the handover request message, the first core network device may forward the handover request message to the control plane entity of the first access network device. Therefore, in embodiments of this application, the second key for control plane security processing may be added to the first handover request message to obtain the second handover request message, and the first core network device may send the second handover request message to the control plane entity of the first access network device.

Alternatively, the first core network device may not use an existing message to send the second key. For example, in this embodiment of this application, a new message, which is, for example, referred to as a second message, may be added to the original handover procedure, and the second message may include the second key. In other words, the first core network device may send the second key to the control plane entity of the first access network device based on the second message. The second message may be considered as a security-related message, or may be considered as a cell handover-related message. In this case, the first core network device further forwards the first handover request message to the first access network device. In this case, the first core network device may first forward the first handover request message and then send the second message, or may first send the second message and then forward the first handover request message, or may simultaneously send the first handover request message and the second message.

In addition, if the user plane entity of the first access network device is deployed in a core network device other than the first core network device, the first core network device may send the third key to the user plane entity of the first access network device. For example, if the first core network device is an AMF, and the user plane entity of the first access network device is deployed in a UPF, or the user plane entity of the first access network device is an independent device on a core network side, the AMF may send the third key to the user plane entity of the first access network device. Alternatively, if the user plane entity of the first access network device is deployed in the first core network device, the first core network device may not need to send the third key to the user plane entity of the first access network device, and the user plane entity of the first access network device may obtain the third key that is obtained by the first core network device through derivation.

In this embodiment of this application, another message, which is, for example, referred to as a third message, may be added to the original handover procedure. If the first core network device needs to send the third key to the user plane entity of the first access network device, the third message may include the third key. In other words, the first core network device may send the third key to the user plane entity of the first access network device based on the third message. The third message may be considered as a security-related message, or may be considered as a cell handover-related message.

If the first core network device needs to send the third key to the user plane entity of the first access network device, the first core network device may first send the third message and then send the second message, or may first send the second message and then send the third message, or may simultaneously send the third message and the second message.

For more content of S704, refer to related descriptions of S503 in the embodiment shown in FIG. 5.

S705: The first core network device sends an NCC to the terminal device, and the terminal device receives the NCC from the first core network device.

For example, the first core network device may send the NCC to the second access network device, and the second access network device forwards the NCC to the terminal device; or the first core network device may send the NCC to the first access network device, the first access network device forwards the NCC to the second access network device, and then the second access network device forwards the NCC to the terminal device. If the first core network device sends the NCC to the first access network device, the first core network device may send the NCC to the control plane entity of the first access network device, the control plane entity of the first access network device forwards the NCC to the second access network device, and then the second access network device forwards the NCC to the terminal device.

For more content of the NCC, refer to related descriptions of S504 in the embodiment shown in FIG. 5.

S706: The first access network device sends a handover request acknowledge message to the first core network device, and the first core network device receives the handover request acknowledge message from the first access network device.

For example, the control plane entity of the first access network device sends the handover request acknowledge message to the first core network device, and the first core network device receives the handover request acknowledge message from the control plane entity of the first access network device.

S707: The first core network device forwards the handover request acknowledge message to the second access network device, and the second access network device receives the handover request acknowledge message from the first core network device.

This embodiment of this application provides the cross-base station cell handover process based on the N2 interface between the base station and the core network device. Therefore, the handover request acknowledge message sent by the first access network device to the second access network device needs to be forwarded by the first core network device.

S708: The second access network device sends a handover command to the terminal device, and the terminal device receives the handover command from the second access network device.

For S708, refer to S307 in the procedure shown in FIG. 3. S705 to S708 are all optional steps, are not necessarily performed, and are represented by dashed lines in FIG. 6.

In addition, after S708 is performed, one or more steps in S308 to S313 in the procedure shown in FIG. 3 may be further performed, in other words, one or more steps related to cell handover may be further performed. Certainly, in an execution process, access network devices cannot directly communicate with each other, and forwarding needs to be performed via the first core network device. Which steps related to cell handover further need to be performed are not limited in this embodiment of this application.

In this embodiment of this application, the control plane entity and the user plane entity that are of the first access network device are two network entities, the control plane entity is located on an access network side, and the user plane entity is located on the core network side. In this way, data security processing is performed on the core network side. Uplink transmission is used as an example. After security processing (for example, encryption or integrity protection) is performed on data at a PDCP layer on a terminal device side, the data is transmitted to a DU on the access network side, processed by the DU, and then transmitted to the user plane entity on the core network side. Corresponding security processing (for example, decryption or integrity verification) is performed on the data at a PDCP layer of the user plane entity, and then the data is transmitted to the UPF on the core network side. Signaling is transmitted from an RRC layer of the terminal device to the PDCP layer of the terminal device. After security processing (for example, encryption or integrity protection) is performed on the signaling at the PDCP layer of the terminal device, the signaling is transmitted to the DU on the access network side, processed by the DU, and then transmitted to the control plane entity on the access network side. After corresponding security processing (for example, decryption or integrity verification) is performed on the signaling at a PDCP layer of the control plane entity, the signaling is delivered to an RRC layer of the control plane entity for parsing. It can be learned that according to the method provided in this embodiment of this application, security processing of the user plane data is performed in the user plane entity, security processing of the control plane signaling is performed in the control plane entity, and the user plane entity and the control plane entity are located in different entities, so that security processing processes of the user plane data and the control plane signaling can be isolated, thereby improving security of the user plane data. In addition, generally, access stratum control signaling is for assisting transmission of the user plane data, and what a user really cares about is the user plane data. Therefore, security processing of the user plane data is performed on the core network side, so that security of user plane data processing can be first ensured. In addition, it can be further ensured, by isolating the security processing process of the user plane from the security processing process of the control plane, that the access network side cannot obtain the key for user plane data security processing, and a security risk of the user plane data can be significantly reduced.

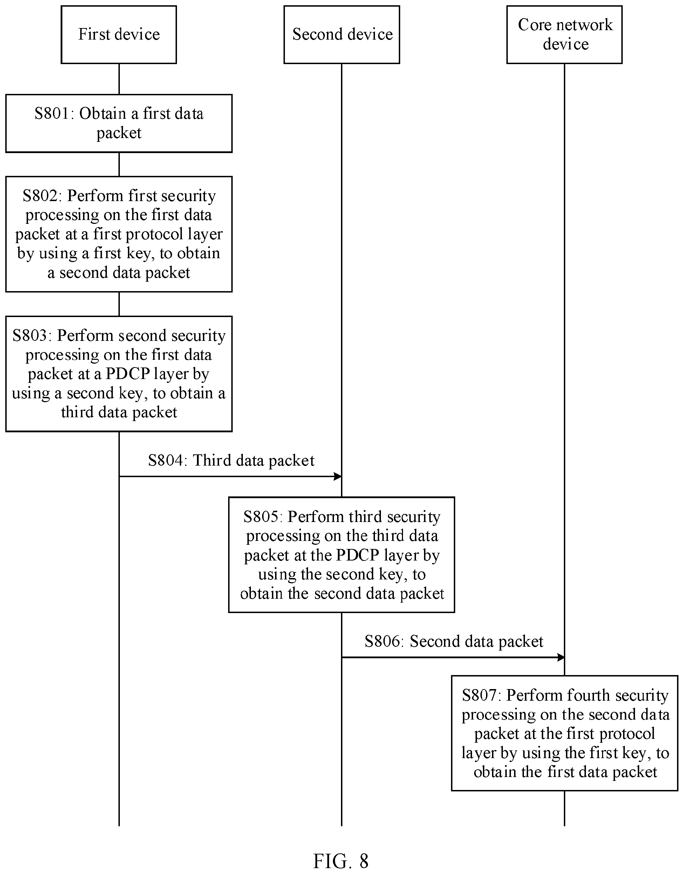

In each of embodiments shown in FIG. 5 to FIG. 7, a control plane entity and a user plane entity that are of an access network device are separated, thereby improving data security. Next, an embodiment of this application provides a data packet sending and receiving method. In this method, data security can also be improved without a need to separate a control plane entity of an access network device from a user plane entity of the access network device. FIG. 8 is a flowchart of the method. In the following description process, an example in which the method is applied to the network architecture shown in FIG. 4A, FIG. 4B, or FIG. 4C is used. In addition, a cell handover procedure in this embodiment of this application is a cross-base station cell handover procedure based on an Xn interface between base stations.

For ease of description, in the following, an example in which the method is performed by a first device and a second device is used. The first device is a data packet transmitting end, and the second device is a data packet receiving end. For example, the first device is a terminal device, and the second device is an access network device; or the first device is an access network device, and the second device is a terminal device. Because an example in which this embodiment of this application is applied to the network architecture shown in FIG. 4A, FIG. 4B, or FIG. 4C is used, a core network device described in this embodiment of this application is, for example, the AMF in the network architecture shown in FIG. 4A, FIG. 4B, or FIG. 4C, or may be a core network device other than the AMF and the UPF; an access network device described in this embodiment of this application may be the access network device in the network architecture shown in FIG. 4A, FIG. 4B, or FIG. 4C; and a terminal device described in this embodiment of this application may be the terminal device in the network architecture shown in FIG. 4A, FIG. 4B, or FIG. 4C.

S801: The first device obtains a first data packet.

For example, in S801, a first protocol layer of the first device may obtain the first data packet. The first protocol layer is a newly added protocol layer in this embodiment of this application, and may also be referred to as a security layer (security layer), or may have another name. In the first device, the first protocol layer may be located above a PDCP layer and below an IP layer and an industrial media access control (media access control, MAC) layer. The industrial MAC layer is not a MAC layer located above a physical layer in an air interface protocol stack, the industrial MAC layer is located above the first protocol layer, and the first protocol layer is located above the MAC layer in the air interface protocol stack. A functional structure of the industrial MAC layer is different from that of the MAC layer in the air interface protocol stack.

The first data packet is, for example, an IP packet or an Ethernet packet. The first device is a transmitting end of the first data packet. If the first data packet is an IP packet, the IP layer of the first device may generate the first data packet, and send the first data packet to the first protocol layer of the first device. Alternatively, if the first data packet is an Ethernet packet, the industrial MAC layer of the first device may generate the first data packet, and send the first data packet to the first protocol layer of the first device.

S802: The first device performs security processing on the first data packet at the first protocol layer by using a first key, to obtain a second data packet.

Security processing herein may include one or more of the following processing manners: integrity protection, integrity verification, encryption, or decryption. For example, if the first device is a transmitting end of the first data packet, the first device may perform integrity protection, encryption, or integrity protection and encryption on the first data packet at the first protocol layer. For another example, if the first device is a receiving end of the first data packet, the first device may perform integrity verification, decryption, or integrity verification and decryption on the first data packet at the first protocol layer. In this embodiment of this application, an example in which the first device is a transmitting end of the first data packet is used.

Before performing security processing on the first data packet at the first protocol layer by using the first key, the first device first needs to obtain the first key. If the first device is the terminal device, the terminal device may have a built-in root key (for example, the second root key described in S504 in the embodiment shown in FIG. 5), and the terminal device may derive the root key according to a first rule, to obtain the first key. Alternatively, if the first device is a core network device, the core network device also has a key corresponding to the terminal device, where for example, the key is referred to as a third key. For example, if the core network device is an AMF, the key (namely, the third key) that is of the core network device and that corresponds to the terminal device is K_{AMF}, namely, the fourth key described in S501 in the embodiment shown in FIG. 5. The key that is of the core network device and that corresponds to the terminal device is a key used when the core network device communicates with the terminal device, or a key that can be used to determine the key used when the core network device communicates with the terminal device. This may be understood as that when communicating with different terminal devices, the core network device may perform security processing by using keys that correspond to corresponding terminal devices and that are for performing security processing on access stratum control plane signaling and user plane data. The core network device may perform derivation on the third key according to the first rule, to obtain the first key. The first rule may be configured by the core network device, or determined by the terminal device through negotiation with the core network device, or specified in a protocol. In addition, optionally, the terminal device may interact with the core network device, to ensure that the first rules used by the terminal device and the core network device are consistent.

If the first device performs integrity protection or integrity verification on the first data packet at the first protocol layer by using the first key, the first key may include a first sub-key, and the first sub-key is used to perform integrity protection or integrity verification on a data packet at the first protocol layer. If the first device encrypts or decrypts the first data packet at the first protocol layer by using the first key, the first key may include a second sub-key, and the second sub-key is used to encrypt or decrypt a data packet at the first protocol layer. That is, the first key may include the first sub-key, or include the second sub-key, or include the first sub-key and the second sub-key. Alternatively, if security processing further includes another security processing process, the first key may further include a key corresponding to the another security processing process.

In addition, an example in which a data packet is an IP packet or an Ethernet packet is used. When a transmitting end of a data packet processes a data packet, to save transmission resource overheads, a PDCP layer of the transmitting end of the data packet may compress a packet header of the data packet, for example, compress an IP packet header or an Ethernet packet header by using a header compression protocol. A length of a compressed packet header is shortened, thereby saving transmission resource overheads. The first protocol layer is introduced in this embodiment of this application. This may cause a problem: Security processing is performed on an entire data packet at the first protocol layer. After the first protocol layer delivers a security-processed data packet to the PDCP layer, the PDCP layer cannot identify a packet header of the data packet, and consequently cannot compress the packet header. This affects a compression function, and may cause a waste of transmission resources or even a transmission error.

Therefore, embodiments of this application provide several solutions, which are separately described below.

### Solution 1

The first device removes a packet header of the first data packet at the first protocol layer, or this is understood as that the packet header of the first data packet is separated from a payload. Then, the first device performs security processing, for example, encryption and/or integrity protection, on the payload of the first data packet at the first protocol layer by using the first key, to obtain a security-encrypted payload. The first device combines the packet header of the first data packet and the security-processed payload at the first protocol layer, and a combined data packet is referred to as the second data packet. In this case, a packet header of the second data packet is the packet header of the first data packet, and a payload of the second data packet is the payload on which security processing has been performed. Then, the first protocol layer may deliver the second data packet to the PDCP layer of the first device. Because security processing is not performed on the packet header (namely, the packet header of the first data packet) of the second data packet, the PDCP layer of the first device can compress the packet header of the second data packet.

### Solution 2

The first device removes a packet header of the first data packet at the first protocol layer, or this is understood as that the packet header of the first data packet is separated from a payload. Then, the first device compresses the packet header of the first data packet at the first protocol layer to obtain a compressed packet header. The first device combines the compressed packet header and the payload of the first data packet at the first protocol layer to obtain a combination, and performs security processing, for example, encryption and/or integrity protection, on the combination to obtain the second data packet, that is, the second data packet is a data packet on which security processing is performed. Then, the first protocol layer delivers the second data packet to the PDCP layer of the first device. Because security processing is performed on the second data packet, the PDCP layer cannot perform processing such as decryption or integrity verification on the second data packet. In this case, the PDCP layer does not need to perform a compression operation. Because the first device has compressed the packet header of the first data packet at the first protocol layer, transmission resource overheads can also be reduced.

The foregoing two solutions are merely examples, and are not intended to limit embodiments of this application. For example, the first device may also use another manner to reduce transmission resource overheads, or when security is improved, the first device may not consider compressing a packet header of a data packet.

S803: The first device performs security processing on the second data packet at the PDCP layer by using the second key, to obtain a third data packet. For differentiation, security processing in S803 may be referred to as second security processing, and security processing in S802 may be referred to as first security processing, in other words, security processing at the PDCP layer is referred to as second security processing, and security processing at the first protocol layer is referred to as first security processing.

Similarly, second security processing herein may also include one or more of the following processing manners: integrity protection, integrity verification, encryption, or decryption. If the first device is the transmitting end of the first data packet, the first device may perform integrity protection, encryption, or integrity protection and encryption on the first data packet at the PDCP layer. Alternatively, if the first device is the receiving end of the first data packet, the first device may perform integrity verification, decryption, or integrity verification and decryption on the first data packet at the PDCP layer. In this embodiment of this application, an example in which the first device is a transmitting end of the first data packet is used.

Before performing second security processing on the second data packet at the PDCP layer by using the second key, the first device first needs to obtain the second key. For example, if the first device is the terminal device, the terminal device may have a built-in root key (for example, the second root key described in S504 in the embodiment shown in FIG. 5), and the terminal device may perform derivation based on the root key, to obtain the second key. Alternatively, if the first device is a core network device, the core network device also has a key corresponding to the terminal device, where for example, the key is referred to as a third key. For example, if the core network device is an AMF, the key (namely, the third key) that is of the core network device and that corresponds to the terminal device is K_{AMF}, namely, the fourth key described in S501 in the embodiment shown in FIG. 5. The core network device may perform derivation based on the third key, to obtain the second key.

If the first device performs integrity protection or integrity verification on the second data packet at the PDCP layer by using the second key, the second key may include a third sub-key, and the third sub-key is used to perform integrity protection or integrity verification on a data packet at the PDCP layer. If the first device encrypts or decrypts the second data packet at the PDCP layer by using the second key, the second key may include a fourth sub-key, and the fourth sub-key is used to encrypt or decrypt a data packet at the PDCP layer. That is, the second key may include the third sub-key, or include the fourth sub-key, or include the third sub-key and the fourth sub-key. Alternatively, if second security processing further includes another security processing process, the second key may further include a key corresponding to the another security processing process.

In addition, if the first device uses Solution 1 at the first protocol layer in S802, the second data packet delivered by the first protocol layer to the PDCP layer is a data packet obtained by combining the packet header of the first data packet and the security-processed payload. In this case, the first device may remove the packet header (namely, the packet header of the first data packet) of the second data packet at the PDCP layer, or this is understood as that the packet header of the first data packet is separated from the payload. Then, the first device compresses the packet header of the first data packet at the PDCP layer to obtain the compressed packet header, combines the compressed packet header and the security-processed payload to obtain the combination, and performs second security processing on the combination at the PDCP layer by using the second key, to obtain the third data packet. In this manner, a packet header of a data packet may still be compressed at the PDCP layer, so that transmission resource overheads can be reduced.

Alternatively, if the first device uses Solution 2 at the first protocol layer in S802, the second data packet delivered by the first protocol layer to the PDCP layer is a data packet on which first security processing is performed, and the PDCP layer cannot obtain the first key. Consequently, the PDCP layer cannot perform an operation such as decryption or integrity verification on the second data packet, and the first device does not perform processing such as compression on the packet header of the second data packet at the PDCP layer. In this case, the first device performs second security processing on the second data packet at the PDCP layer by using the second key, to obtain the third data packet. In this manner, a packet header of a data packet is compressed at the first protocol layer, so that transmission resource overheads can be reduced.

S804: The first device sends the third data packet, and correspondingly, the second device receives the third data packet from the first device.

After obtaining the third data packet, the first device may send the third data packet, and the second device may receive the third data packet from the first device.

S805: The second device performs third security processing on the third data packet at the PDCP layer by using the second key, to obtain the second data packet.

After receiving the third data packet, the second device delivers the third data packet to a PDCP layer of the second device. In this case, the second device may perform third security processing on the third data packet at the PDCP layer by using the second key. If the second device is the receiving end of the third data packet, the second device may perform integrity verification, decryption, or integrity verification and decryption on the third data packet at the PDCP layer. In other words, third security processing may include integrity verification, decryption, integrity verification and decryption, or the like.

After performing third security processing on the third data packet at the PDCP layer, the second device can obtain the second data packet. In an optional implementation, after performing third security processing on the third data packet at the PDCP layer, the second device may obtain the compressed packet header and the security-processed payload. In this case, the second device may remove the packet header (namely, the packet header of the first data packet) of the second data packet at the PDCP layer, or this is understood as that the packet header of the first data packet is separated from the security-processed payload. Then, the second device decompresses the compressed packet header at the PDCP layer to obtain a packet header, where the packet header is the packet header of the first data packet. The second device may obtain the second data packet by combining the packet header and the security-processed payload at the PDCP layer.

In another optional implementation, the second device may obtain the second data packet after performing third security processing on the third data packet at the PDCP layer. The first security processing is performed on the entire second data packet. In this case, the second device does not need to perform other processing on the second data packet at the PDCP layer.

For example, the first protocol layer is not set in the second device, and consequently the second device cannot obtain a corresponding key. In this way, the first device cannot perform processing such as decryption or integrity protection on the second data packet.

S806: The second device sends the second data packet to the core network device, and the core network device receives the second data packet from the second device.

S807: The core network device performs fourth security processing on the second data packet at the first protocol layer by using the first key, to obtain the first data packet.

If the second data packet is the combination of the packet header of the first data packet and the security-processed payload, the core network device may remove the packet header of the first data packet at the first protocol layer, or this is understood as that the packet header of the first data packet is separated from the security-processed payload. Then, the core network device performs fourth security processing on the security-processed payload at the first protocol layer, for example, performs decryption and/or integrity verification, to obtain the payload of the first data packet. Then, the core network device combines the packet header of the first data packet and the payload of the first data packet at the first protocol layer, to obtain the first data packet, so that the core network device can obtain data included in the first data packet.

Alternatively, if the second data packet is a data packet, where security processing is performed on the entire data packet, the core network device performs fourth security processing on the second data packet at the first protocol layer, for example, performs decryption and/or integrity verification, to obtain the payload of the first data packet and the compressed packet header. The core network device may remove the compressed packet header at the first protocol layer, or this is understood as that the compressed packet header is separated from the payload of the first data packet. Then, the core network device decompresses the compressed packet header to obtain the packet header of the first data packet. Then, the core network device combines the packet header of the first data packet and the payload of the first data packet at the first protocol layer, to obtain the first data packet, so that the core network device can obtain data included in the first data packet.

A key for fourth security processing is also the first key.

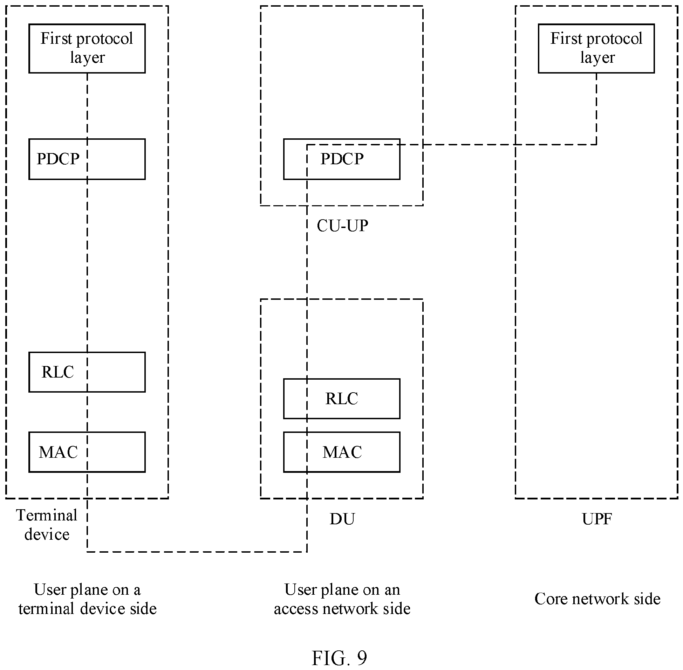

S806 and S807 in FIG. 8 are described in an example of uplink transmission. To be specific, the first device is a terminal device, the second device is an access network device, the first data packet is an uplink data packet sent by the terminal device, and after being processed by the access network device, the uplink data packet is then sent to the core network device. Refer to FIG. 9. After first security processing is first performed on a data packet at a first protocol layer on a terminal device side, the data packet is transmitted to a PDCP layer of a terminal device for second security processing, and then is transmitted to an access network device. In this case, two-level security processing of the first protocol layer and the PDCP layer is performed on the data packet received by the access network device. Because a first protocol layer is not set in the access network device, only security processing of the terminal device at the PDCP layer can be decapsulated. Therefore, the access network device still cannot read content of the data packet, thereby ensuring security of data on an access network device side. After being processed by the access network device, the data is transmitted to the core network device (for example, a UPF). A first protocol layer is also set in the core network device, and the core network device can read the content of the data packet only after performing, at the first protocol layer of the core network device, security processing (for example, fourth security processing) corresponding to that of the first protocol layer of the terminal device.

If a downlink transmission process is used, the first device is a core network device, the second device is an access network device, and the first data packet is a downlink data packet sent by the core network device. After being processed by the access network device, the downlink data packet is sent to the terminal device. In other words, if the downlink transmission process is used, S806 is as follows: The second device sends the second data packet to the terminal device, and the terminal device receives the second data packet from the second device. Correspondingly, if the downlink transmission process is used, S807 is as follows: The terminal device performs fourth security processing on the second data packet at the first protocol layer to obtain the first data packet. Specifically, after first security processing is first performed on a data packet at a first protocol layer on a core network device side, the data packet is transmitted to a PDCP layer of the core network device for second security processing, and then is transmitted to the access network device. In this case, two-level security processing of the first protocol layer and the PDCP layer is performed on the data packet received by the access network device. Because a first protocol layer is not set in the access network device, only security processing of the core network device at the PDCP layer can be decapsulated. Therefore, the access network device still cannot read content of the data packet, thereby ensuring security of data on an access network device side. After being processed by the access network device, the data is transmitted to the terminal device. A first protocol layer is also set in the terminal device, and the terminal device can read the content of the data packet only after performing, at the first protocol layer of the terminal device, security processing (for example, fourth security processing) corresponding to that of the first protocol layer of the core network device.

In embodiments of this application, a two-level security processing mechanism is set for a data packet. An access network device can perform only one level of security processing (namely, security processing at a PDCP layer), but cannot perform security processing at a first protocol layer. Therefore, data is invisible to the access network device, and the access network device cannot obtain the data, thereby ensuring security of the data on an access network device side.

With reference to the accompanying drawings, the following describes apparatuses configured to implement the foregoing methods in embodiments of this application. Therefore, all the foregoing content may be used in the following embodiments. Repeated content is not described again.

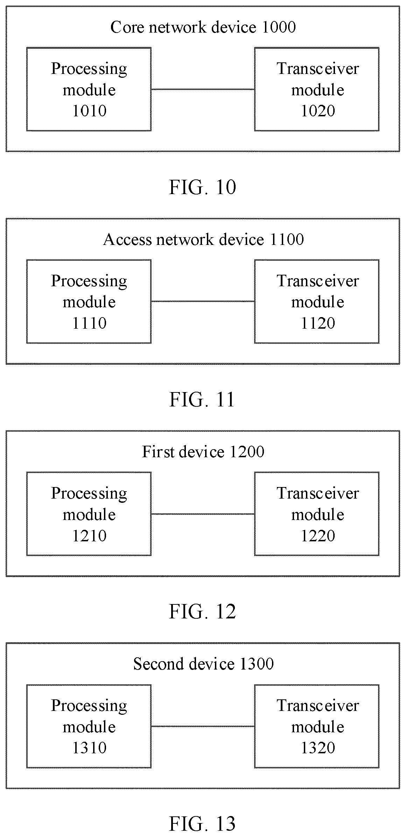

FIG. 10 is a schematic block diagram of a communication apparatus 1000 according to an embodiment of this application. For example, the communication apparatus 1000 is a core network device 1000. For example, the core network device 1000 is the first core network device described in any one of embodiments shown in FIG. 5 to FIG. 7.

The core network device 1000 includes a processing module 1010 and a transceiver module 1020. For example, the core network device 1000 may be a core network device, or may be a chip used in the core network device or another combined device or component that has a function of the core network device. When the core network device 1000 is a core network device, the transceiver module 1020 may be a transceiver, the transceiver may include an antenna, a radio frequency circuit, and the like, and the processing module 1010 may be a processor (or a processing circuit), for example, a baseband processor. The baseband processor may include one or more central processing units (central processing units, CPUs). When the core network device 1000 is a component having a function of the foregoing core network device, the transceiver module 1020 may be a radio frequency unit, and the processing module 1010 may be a processor (or a processing circuit), for example, a baseband processor. When the core network device 1000 is a chip system, the transceiver module 1020 may be an input/output interface of a chip (for example, a baseband chip), and the processing module 1010 may be a processor (or a processing circuit) of the chip system, and may include one or more central processing units. It should be understood that the processing module 1010 in this embodiment of this application may be implemented by a processor or a processor-related circuit component (or a processing circuit), and the transceiver module 1020 may be implemented by a transceiver or a transceiver-related circuit component.

For example, the processing module 1010 may be configured to perform all operations other than receiving and sending operations performed by the first core network device in the embodiment shown in FIG. 5, for example, S501 and S502, and/or configured to support another process of the technology described in this specification. The transceiver module 1020 may be configured to perform all receiving and sending operations performed by the first core network device in the embodiment shown in FIG. 5, for example, S503 and S504, and/or configured to support another process of the technology described in this specification.

For another example, the processing module 1010 may be configured to perform all operations other than receiving and sending operations performed by the first core network device in the embodiment shown in FIG. 6, for example, S603 and S604, and/or configured to support another process of the technology described in this specification. The transceiver module 1020 may be configured to perform all receiving and sending operations performed by the first core network device in the embodiment shown in FIG. 6, for example, S601, S605, and S606, and/or configured to support another process of the technology described in this specification.

For still another example, the processing module 1010 may be configured to perform all operations other than receiving and sending operations performed by the first core network device in the embodiment shown in FIG. 7, for example, S702 and S703, and/or configured to support another process of the technology described in this specification. The transceiver module 1020 may be configured to perform all receiving and sending operations performed by the first core network device in the embodiment shown in FIG. 7, for example, S701, S704, S705, S706, and S707, and/or configured to support another process of the technology described in this specification.

In addition, the transceiver module 1020 may be a functional module, and the functional module can complete both a sending operation and a receiving operation. For example, the transceiver module 1020 may be configured to perform all sending operations and receiving operations performed by the first core network device in any one of embodiments shown in FIG. 5 to FIG. 7. For example, when performing the sending operation, the transceiver module 1020 may be considered as a sending module, and when performing the receiving operation, the transceiver module 1020 may be considered as a receiving module. Alternatively, the transceiver module 1020 may be two functional modules. The transceiver module 1020 may be considered as a general term of the two functional modules. The two functional modules are a sending module and a receiving module. The sending module is configured to complete a sending operation. For example, the sending module may be configured to perform all sending operations performed by the first core network device in any one of embodiments shown in FIG. 5 to FIG. 7. The receiving module is configured to complete a receiving operation. For example, the receiving module may be configured to perform all receiving operations performed by the first core network device in any one of embodiments shown in FIG. 5 to FIG. 7.

The processing module 1010 is configured to obtain a first key.

The processing module 1010 is further configured to perform derivation based on the first key to obtain a second key and a third key, where the second key is for performing security processing on control plane signaling of a terminal device, and the third key is for performing security processing on user plane data of the terminal device.

The transceiver module 1020 is configured to: send the second key to a control plane entity of a first access network device, and send the third key to a user plane entity of the first access network device, where the control plane entity of the first access network device performs control plane signaling communication with the terminal device, and the user plane entity of the first access network device performs user plane data communication with the terminal device.

In an optional implementation, the control plane entity of the first access network device is located on a side of the first access network device, and the user plane entity of the first access network device is located on a core network device side.

In an optional implementation, the first key is obtained based on a first root key corresponding to the terminal device, and the first root key is stored in a core network device.

In an optional implementation, the transceiver module 1020 is further configured to receive an input parameter from a second access network device, where the input parameter is for determining the first key, the second access network device is a source access network device for cell handover of the terminal device, and the first access network device is a target access network device for cell handover of the terminal device.

In an optional implementation, the input parameter includes a PCI of a first cell and/or an ARFCN of the first cell, and the first cell is a target cell for cell handover of the terminal device.

In an optional implementation, the input parameter is included in a first handover request message, the first handover request message is for requesting to hand over the terminal device to the first cell, and the first cell is the target cell for cell handover of the terminal device.

In an optional implementation, the second key is included in a second handover request message, and the second handover request message is for requesting to hand over the terminal device to the first cell.

In an optional implementation, the transceiver module 1020 is further configured to send an NCC to the terminal device, where the NCC is for determining the second key and/or the third key.

In an optional implementation, security processing includes one or more of the following: integrity protection, integrity verification, encryption, or decryption.

For other functions that can be implemented by the core network device 1000, refer to the related descriptions of any one of embodiments shown in FIG. 5 to FIG. 7. Details are not described again.

FIG. 11 is a schematic block diagram of a communication apparatus 1100 according to an embodiment of this application. For example, the communication apparatus 1100 is an access network device 1100. For example, the access network device 1100 is, for example, the second access network device in the embodiment shown in FIG. 6 or the embodiment shown in FIG. 7.

The access network device 1100 includes a processing module 1110. Optionally, the access network device may further include a transceiver module 1120. For example, the access network device 1100 may be an access network device, or may be a chip used in the access network device or another combined device or component that has a function of the access network device. When the access network device 1100 is an access network device, the transceiver module 1120 may be a transceiver, the transceiver may include an antenna, a radio frequency circuit, and the like, and the processing module 1110 may be a processor (or a processing circuit), for example, a baseband processor. The baseband processor may include one or more CPUs. When the access network device 1100 is a component having a function of the foregoing access network device, the transceiver module 1120 may be a radio frequency unit, and the processing module 1110 may be a processor (or a processing circuit), for example, a baseband processor. When the access network device 1100 is a chip system, the transceiver module 1120 may be an input/output interface of a chip (for example, a baseband chip), and the processing module 1110 may be a processor (or a processing circuit) of the chip system, and may include one or more central processing units. It should be understood that the processing module 1110 in this embodiment of this application may be implemented by a processor or a processor-related circuit component (which is also referred to as a processing circuit), and the transceiver module 1120 may be implemented by a transceiver or a transceiver-related circuit component.

For example, the processing module 1110 may be configured to perform all operations other than receiving and sending operations performed by the second access network device in the embodiment shown in FIG. 6, for example, determining to hand over a terminal device to a first access network device, and/or configured to support another process of the technology described in this specification. The transceiver module 1120 may be configured to perform all receiving and sending operations performed by the second access network device in the embodiment shown in FIG. 6, for example, S601, S602, S607, and S608, and/or configured to support another process of the technology described in this specification.

For another example, the processing module 1110 may be configured to perform all operations other than receiving and sending operations performed by the second access network device in the embodiment shown in FIG. 7, for example, determining to hand over a terminal device to a first access network device, and/or configured to support another process of the technology described in this specification. The transceiver module 1120 may be configured to perform all receiving and sending operations performed by the second access network device in the embodiment shown in FIG. 7, for example, S701, S707, and S708, and/or configured to support another process of the technology described in this specification.

In addition, for an implementation of the transceiver module 1120, refer to the descriptions of the implementation of the transceiver module 1020.

The processing module 1110 is configured to determine to hand over the terminal device from the second access network device to the first access network device.

The transceiver module 1120 is configured to send an input parameter to a first core network device, where the input parameter is for determining a first key, the first key is for determining a second key and a third key, the second key is for performing security processing on control plane signaling of the terminal device, and the third key is for performing security processing on user plane data of the terminal device.

In an optional implementation, the input parameter includes a PCI of a first cell and/or an ARFCN of the first cell, and the first cell is a target cell for cell handover of the terminal device.

In an optional implementation, the input parameter is included in a first handover request message, the first handover request message is for requesting to hand over the terminal device to the first cell, and the first cell is the target cell for cell handover of the terminal device.

For other functions that can be implemented by the access network device 1100, refer to related descriptions of the embodiment shown in FIG. 6 or the embodiment shown in FIG. 7. Details are not described again.

FIG. 12 is a schematic block diagram of a communication apparatus 1200 according to an embodiment of this application. For example, the communication apparatus 1200 is a first device 1200.

The first device 1200 includes a processing module 1210. Optionally, the first device may further include a transceiver module 1220. For example, the first device 1200 may be a terminal device, or may be a chip used in the terminal device or another combined device or a component that has a function of the terminal device. When the first device 1200 is a terminal device, the transceiver module 1220 may be a transceiver, the transceiver may include an antenna, a radio frequency circuit, and the like, and the processing module 1210 may be a processor (or a processing circuit), for example, a baseband processor. The baseband processor may include one or more CPUs. When the first device 1200 is a component having a function of the foregoing terminal device, the transceiver module 1220 may be a radio frequency unit, and the processing module 1210 may be a processor (or a processing circuit), for example, a baseband processor. When the first device 1200 is a chip system, the transceiver module 1220 may be an input/output interface of a chip (for example, a baseband chip), and the processing module 1210 may be a processor (or a processing circuit) of the chip system, and may include one or more central processing units. It should be understood that the processing module 1210 in this embodiment of this application may be implemented by a processor or a processor-related circuit component (which is also referred to as a processing circuit), and the transceiver module 1220 may be implemented by a transceiver or a transceiver-related circuit component.

Alternatively, for example, the first device 1200 may be a network device, or may be a chip used in the network device or another combined device or a component that has a function of the network device. For example, the network device is a core network device. When the first device 1200 is a network device, the transceiver module 1220 may be a transceiver, the transceiver may include an antenna, a radio frequency circuit, and the like, and the processing module 1210 may be a processor (or a processing circuit), for example, a baseband processor. The baseband processor may include one or more central processing units (central processing units, CPUs). When the first device 1200 is a component having a function of the foregoing network device, the transceiver module 1220 may be a radio frequency unit, and the processing module 1210 may be a processor (or a processing circuit), for example, a baseband processor. When the first device 1200 is a chip system, the transceiver module 1220 may be an input/output interface of a chip (for example, a baseband chip), and the processing module 1210 may be a processor (or a processing circuit) of the chip system, and may include one or more central processing units. It should be understood that the processing module 1210 in this embodiment of this application may be implemented by a processor or a processor-related circuit component (or a processing circuit), and the transceiver module 1220 may be implemented by a transceiver or a transceiver-related circuit component.

For example, the processing module 1210 may be configured to perform all operations other than receiving and sending operations performed by the first device in the embodiment shown in FIG. 8, for example, S801 to S803, and/or configured to support another process of the technology described in this specification. The transceiver module 1220 may be configured to perform all receiving and sending operations performed by the first device in the embodiment shown in FIG. 8, for example, S804, and/or configured to support another process of the technology described in this specification.

In addition, for an implementation of the transceiver module 1220, refer to the descriptions of the implementation of the transceiver module 1020.

The processing module 1210 is configured to obtain a first data packet.

The processing module 1210 is further configured to perform security processing on the first data packet at a first protocol layer by using a first key, to obtain a second data packet.

The processing module 1210 is further configured to encrypt the second data packet at a PDCP layer by using a second key, to obtain a third data packet.

The transceiver module 1220 is configured to send the third data packet.

In an optional implementation, the first key is obtained based on a first root key corresponding to the terminal device.

In an optional implementation, the processing module 1210 is configured to perform security processing on the first data packet at the first protocol layer by using the first key, to obtain the second data packet in the following manner:
performing security processing on a payload of the first data packet at the first protocol layer by using the first key, to obtain a security-processed payload; and
combining a packet header of the first data packet and the security-processed payload, to obtain the second data packet.

In an optional implementation, the processing module 1210 is configured to encrypt the second data packet at the PDCP layer by using the second key, to obtain the third data packet in the following manner:
compressing the packet header of the first data packet at the PDCP layer to obtain a compressed packet header; and
encrypting the compressed packet header and the security-processed payload by using the second key, to obtain the third data packet.

In an optional implementation, the processing module 1210 is configured to perform security processing on the first data packet at the first protocol layer by using the first key, to obtain the second data packet in the following manner:
compressing a packet header of the first data packet at the first protocol layer to obtain a compressed packet header; and
performing security processing on the compressed packet header and a payload of the first data packet by using the first key, to obtain the second data packet.

In an optional implementation, security processing includes one or more of the following: integrity protection, integrity verification, encryption, or decryption.

For other functions that can be implemented by the first device 1200, refer to the related descriptions of the embodiment shown in FIG. 8. Details are not described again.

FIG. 13 is a schematic block diagram of a communication apparatus 1300 according to an embodiment of this application. For example, the communication apparatus 1300 is a second device 1300.

The second device 1300 includes a processing module 1310. Optionally, the second device may further include a transceiver module 1320. For example, the second device 1300 may be an access network device, or may be a chip used in the access network device or another combined device or component that has a function of the access network device. When the second device 1300 is an access network device, the transceiver module 1320 may be a transceiver, the transceiver may include an antenna, a radio frequency circuit, and the like, and the processing module 1310 may be a processor (or a processing circuit), for example, a baseband processor. The baseband processor may include one or more CPUs. When the second device 1300 is a component having a function of the foregoing access network device, the transceiver module 1320 may be a radio frequency unit, and the processing module 1310 may be a processor (or a processing circuit), for example, a baseband processor. When the second device 1300 is a chip system, the transceiver module 1320 may be an input/output interface of a chip (for example, a baseband chip), and the processing module 1310 may be a processor (or a processing circuit) of the chip system, and may include one or more central processing units. It should be understood that the processing module 1310 in this embodiment of this application may be implemented by a processor or a processor-related circuit component (which is also referred to as a processing circuit), and the transceiver module 1320 may be implemented by a transceiver or a transceiver-related circuit component.

For example, the processing module 1310 may be configured to perform all operations other than receiving and sending operations performed by the second device in the embodiment shown in FIG. 8, for example, S507, and/or configured to support another process of the technology described in this specification. The transceiver module 1320 may be configured to perform all receiving and sending operations performed by the second device in the embodiment shown in FIG. 8, for example, S501, S503, S506, S512, and S513, and/or configured to support another process of the technology described in this specification.

In addition, for an implementation of the transceiver module 1320, refer to the descriptions of the implementation of the transceiver module 1020.

The transceiver module 1320 is configured to receive a third data packet.

The processing module 1310 is configured to decrypt, at a PDCP layer, the third data packet by using a second key, to obtain a second data packet, where the second data packet is a data packet on which security processing is performed.

The transceiver module 1320 is further configured to send the second data packet to a core network device.

In an optional implementation, the processing module 1310 is configured to decrypt the third data packet at the PDCP layer by using the second key, to obtain the second data packet in the following manner:
decrypting the third data packet at the PDCP layer by using the second key, to obtain a compressed packet header and a security-processed payload;
decompressing the compressed packet header to obtain a packet header; and
combining the packet header and the security-processed payload, to obtain the second data packet.

In an optional implementation, security processing includes one or more of the following: integrity protection, integrity verification, encryption, or decryption.

For other functions that can be implemented by the second device 1300, refer to the related descriptions of the embodiment shown in FIG. 8. Details are not described again.

An embodiment of this application further provides a communication apparatus. The communication apparatus may be a terminal device or a circuit. The communication apparatus may be configured to perform actions performed by the terminal device (where for example, a first device may be the terminal device) in the foregoing method embodiments.

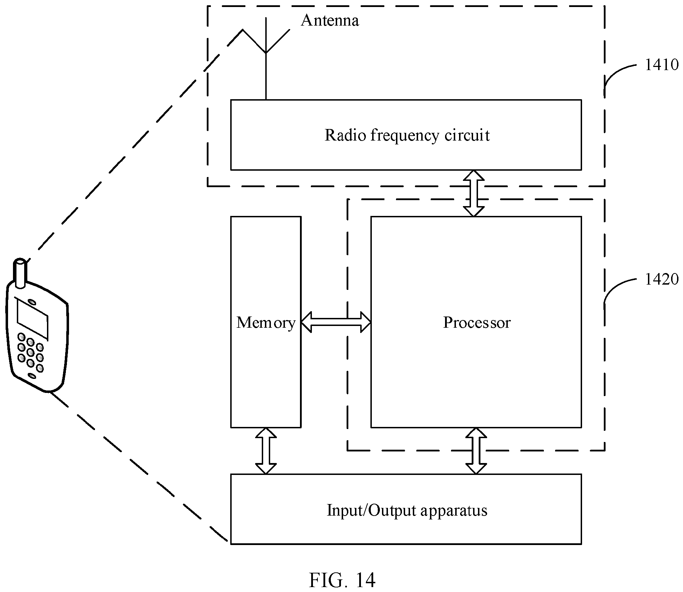

When the communication apparatus is a terminal device, FIG. 14 is a simplified schematic diagram of a structure of a terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may not have the input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the terminal device (where the transceiver unit may be a functional unit, and the functional unit can implement a sending function and a receiving function; or the transceiver unit may include two functional units: a receiving unit that can implement a receiving function and a sending unit that can implement a sending function), and a processor that has a processing function is considered as a processing unit of the terminal device. As shown in FIG. 14, the terminal device includes a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that if the first device in the embodiment shown in FIG. 8 is a terminal device, the transceiver unit 1410 is configured to perform the sending operation and the receiving operation on a side of the first device in the embodiment shown in FIG. 8, and the processing unit 1420 is configured to perform an operation other than the receiving and sending operations on the first device in the embodiment shown in FIG. 8.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

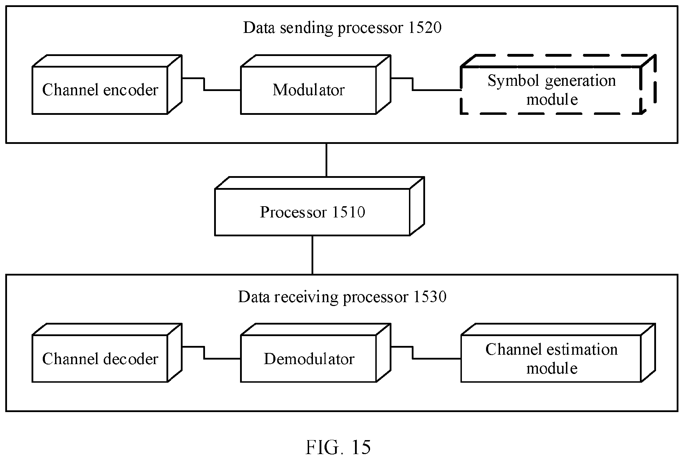

When the communication apparatus in this embodiment is a terminal device, refer to a device shown in FIG. 15. In an example, the device can complete a function similar to the function of the processing module 1210 in FIG. 12. The processing module 1210 in the foregoing embodiment may be the processor 1510 in FIG. 15, and completes corresponding functions. The transceiver module 1220 in the foregoing embodiment may be a data sending processor 1520 and/or a data receiving processor 1530 in FIG. 15, and completes corresponding functions. Although a channel encoder and a channel decoder are shown in FIG. 15, it may be understood that the modules are merely examples and do not constitute any limitation on this embodiment.

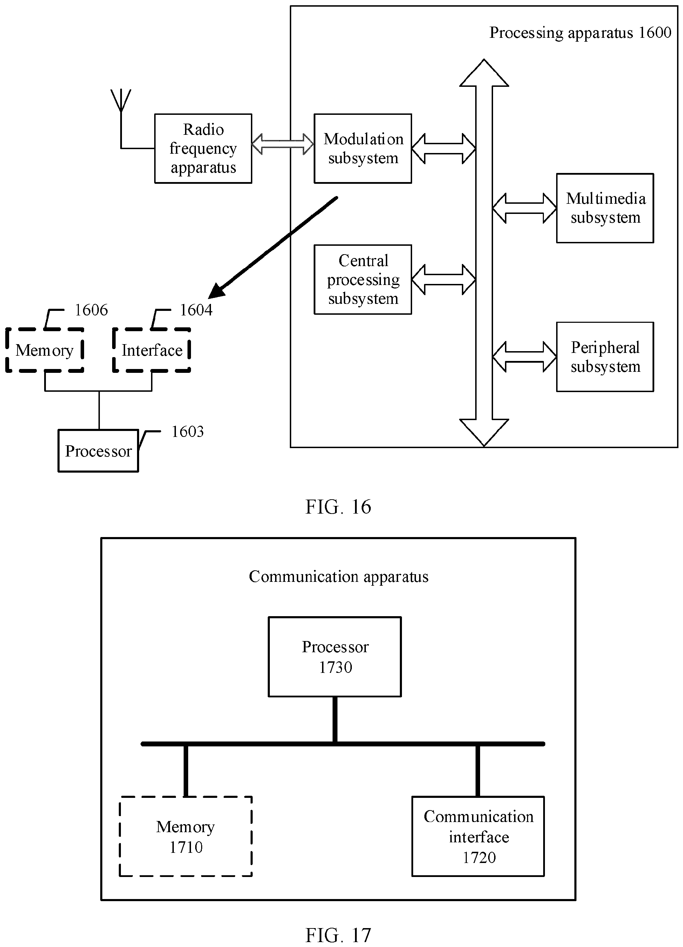

FIG. 16 shows another form of this embodiment. A processing apparatus 1600 includes modules such as a modulation sub-system, a central processing sub-system, and a peripheral sub-system. The communication apparatus in this embodiment may be used as the modulation subsystem. Specifically, the modulation sub-system may include a processor 1603 and an interface 1604. The processor 1603 completes a function of the processing module 1210, and the interface 1604 completes a function of the transceiver module 1220. In another variant, the modulation subsystem includes a memory 1606, a processor 1603, and a program that is stored in the memory 1606 and that can be run on the processor. When executing the program, the processor 1603 implements the method on a terminal device side in the foregoing method embodiments. It should be noted that, the memory 1606 may be nonvolatile or volatile, and may be located inside the modulation sub-system or inside the processing apparatus 1600, provided that the memory 1606 can be connected to the processor 1603.

FIG. 17 is a schematic diagram of yet another communication apparatus according to an embodiment of this application. The communication apparatus is configured to implement operations of the first core network device, the second access network device, or the second device in the foregoing embodiments. The communication apparatus includes a processor 1730 and a communication interface 1720. Optionally, the communication apparatus further includes a memory 1710. The communication interface 1720 is configured to implement communication with another device.

In the foregoing embodiments, the method performed by the first core network device, the second access network device, or the second device may be implemented by the processor 1730 by invoking a program stored in a memory (which may be the memory 1710 in the first core network device, the second access network device, or the second device, or may be an external memory). In other words, the apparatus used for the first core network device, the second access network device, or the second device may include the processor 1730. The processor 1730 invokes the program in the memory, to perform the method performed by the first core network device, the second access network device, or the second device in the foregoing method embodiments. The processor herein may be an integrated circuit having a signal processing capability, for example, a CPU. The apparatus used in the first core network device, the second access network device, or the second device may be implemented by configuring one or more integrated circuits that implement the foregoing methods, for example, one or more ASICs, one or more microprocessors DSPs, one or more FPGAs, or a combination of at least two of the integrated circuit forms. Alternatively, the foregoing implementations may be combined.

For example, a function/an implementation process of the processing module 1010 in FIG. 10 may be implemented by the processor 1730 in the communication apparatus 1700 shown in FIG. 17 by invoking computer-executable instructions stored in the memory 1710, and a function/an implementation process of the transceiver module 1020 in FIG. 10 may be implemented by the communication interface 1720 in the communication apparatus 1700 shown in FIG. 17.

For another example, a function/an implementation process of the processing module 1110 in FIG. 11 may be implemented by the processor 1730 in the communication apparatus 1700 shown in FIG. 17 by invoking computer-executable instructions stored in the memory 1710, and a function/an implementation process of the transceiver module 1120 in FIG. 11 may be implemented by the communication interface 1720 in the communication apparatus 1700 shown in FIG. 17.

For another example, a function/an implementation process of the processing module 1210 in FIG. 12 may be implemented by the processor 1730 in the communication apparatus 1700 shown in FIG. 17 by invoking computer-executable instructions stored in the memory 1710, and a function/an implementation process of the transceiver module 1220 in FIG. 12 may be implemented by the communication interface 1720 in the communication apparatus 1700 shown in FIG. 17.

For still another example, a function/an implementation process of the processing module 1310 in FIG. 13 may be implemented by the processor 1730 in the communication apparatus 1700 shown in FIG. 17 by invoking computer-executable instructions stored in the memory 1710, and a function/an implementation process of the transceiver module 1320 in FIG. 13 may be implemented by the communication interface 1720 in the communication apparatus 1700 shown in FIG. 17.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits in embodiments of this application may implement or operate the functions via a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may be integrated into a processor. The processor and the storage medium may be disposed in the ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more example designs, the functions described in embodiments of this application may be implemented by using hardware, software, firmware, or any combination thereof. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage medium may be an available medium that may be accessed by any general-purpose or dedicated computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure or in a form that can be read by a general-purpose or special computer or a general-purpose or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disc (disc) and the disk (disk) include a compact disk, a laser disk, an optical disc, a digital versatile disc (digital versatile disc, DVD), a floppy disk, and a Blu-ray disc. The disk usually copies data by a magnetic means, and the disc usually copies data optically by a laser means. The foregoing combination may also be included in the computer-readable medium.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on technical solutions of embodiments of this application shall fall within the protection scope of embodiments of this application. The foregoing descriptions in this specification of this application may enable technologies in the art to use or implement the content of embodiments of this application. Any modification based on the disclosed content should be considered definite in the art. The basic principles described in embodiments of this application may be applied to other variations without departing from the essence and scope of this application. Therefore, the content disclosed in embodiments of this application is not limited to the described embodiments and designs, but may also be extended to a maximum scope consistent with the principles and disclosed new features of this application.

Although this application is described with reference to specific features and embodiments thereof, it is clear that various modifications and combinations may be made to this application without departing from the spirit and scope of embodiments of this application. Correspondingly, the specification and accompanying drawings are merely example descriptions of this application defined by the appended claims, and are considered as any of or all modifications, variations, combinations or equivalents that cover the scope of this application. It is clear that, a person skilled in the art can make various modifications and variations to this application without departing from the scope of this application. In this way, embodiments of this application are intended to cover these modifications and variations provided that they fall within the scope of protection defined by the following claims of this application and their equivalent technologies.

## Claims

1. A key obtaining method, comprising:
obtaining, by a first core network device, a first key;
performing, by the first core network device, derivation based on the first key to obtain a second key and a third key, wherein the second key is for performing security processing on control plane signaling of a terminal device, and the third key is for performing security processing on user plane data of the terminal device; and
sending, by the first core network device, the second key to a control plane entity of a first access network device, and sending the third key to a user plane entity of the first access network device, wherein the control plane entity of the first access network device performs control plane signaling communication with the terminal device, and the user plane entity of the first access network device performs user plane data communication with the terminal device.

2. The method according to claim 1, wherein the control plane entity of the first access network device is located on a side of the first access network device, and the user plane entity of the first access network device is located on a core network device side.

3. The method according to claim 1 or 2, wherein the first key is obtained based on a first root key corresponding to the terminal device, and the first root key is stored in a core network device.

4. The method according to claim 1 or 2, wherein the method further comprises:
receiving, by the first core network device, an input parameter from a second access network device, wherein the input parameter is for determining the first key, the second access network device is a source access network device for cell handover of the terminal device, and the first access network device is a target access network device for cell handover of the terminal device.

5. The method according to claim 4, wherein the input parameter comprises a physical cell identifier PCI of a first cell and/or an absolute radio frequency channel number ARFCN of the first cell, and the first cell is a target cell for cell handover of the terminal device.

6. The method according to claim 4 or 5, wherein the input parameter is comprised in a first handover request message, the first handover request message is for requesting to hand over the terminal device to the first cell, and the first cell is the target cell for cell handover of the terminal device.

7. The method according to claim 6, wherein the second key is comprised in a second handover request message, and the second handover request message is for requesting to hand over the terminal device to the first cell.

8. The method according to any one of claims 1 to 7, wherein the method further comprises:
sending, by the first core network device, a next hop chaining counter NCC to the terminal device, wherein the NCC is for determining the second key and/or the third key.

9. A key obtaining method, comprising:
determining, by a second access network device, to hand over a terminal device from the second access network device to a first access network device; and
sending, by the second access network device, an input parameter to a first core network device, wherein the input parameter is for determining a first key, the first key is for determining a second key and a third key, the second key is for performing security processing on control plane signaling of the terminal device, and the third key is for performing security processing on user plane data of the terminal device.

10. The method according to claim 9, wherein the input parameter comprises a PCI of a first cell and/or an ARFCN of the first cell, and the first cell is a target cell for cell handover of the terminal device.

11. The method according to claim 9 or 10, wherein the input parameter is comprised in a first handover request message, the first handover request message is for requesting to hand over the terminal device to the first cell, and the first cell is the target cell for cell handover of the terminal device.

12. A communication apparatus, comprising:
a processing module, configured to obtain a first key, wherein
the processing module is further configured to perform derivation based on the first key to obtain a second key and a third key, wherein the second key is for performing security processing on control plane signaling of a terminal device, and the third key is for performing security processing on user plane data of the terminal device; and
a transceiver module, configured to: send the second key to a control plane entity of a first access network device, and send the third key to a user plane entity of the first access network device, wherein the control plane entity of the first access network device performs control plane signaling communication with the terminal device, and the user plane entity of the first access network device performs user plane data communication with the terminal device.

13. The communication apparatus according to claim 12, wherein the control plane entity of the first access network device is located on a side of the first access network device, and the user plane entity of the first access network device is located on a core network device side.

14. The communication apparatus according to claim 12 or 13, wherein the first key is obtained based on a first root key corresponding to the terminal device, and the first root key is stored in a core network device.

15. The communication apparatus according to claim 12 or 13, wherein the transceiver module is further configured to receive an input parameter from a second access network device, wherein the input parameter is for determining the first key, the second access network device is a source access network device for cell handover of the terminal device, and the first access network device is a target access network device for cell handover of the terminal device.

16. The communication apparatus according to claim 15, wherein the input parameter comprises a PCI of a first cell and/or an ARFCN of the first cell, and the first cell is a target cell for cell handover of the terminal device.

17. The communication apparatus according to claim 15 or 16, wherein the input parameter is comprised in a first handover request message, the first handover request message is for requesting to hand over the terminal device to the first cell, and the first cell is the target cell for cell handover of the terminal device.

18. The communication apparatus according to claim 17, wherein the second key is comprised in a second handover request message, and the second handover request message is for requesting to hand over the terminal device to the first cell.

19. The communication apparatus according to any one of claims 12 to 18, wherein the transceiver module is further configured to send an NCC to the terminal device, wherein the NCC is for determining the second key and/or the third key.

20. A communication apparatus, comprising:
a processing module, configured to determine to hand over a terminal device from a second access network device to a first access network device; and
a transceiver module, configured to send an input parameter to a first core network device, wherein the input parameter is for determining a first key, the first key is for determining a second key and a third key, the second key is for performing security processing on control plane signaling of the terminal device, and the third key is for performing security processing on user plane data of the terminal device.

21. The communication apparatus according to claim 20, wherein the input parameter comprises a PCI of a first cell and/or an ARFCN of the first cell, and the first cell is a target cell for cell handover of the terminal device.

22. The communication apparatus according to claim 20 or 21, wherein the input parameter is comprised in a first handover request message, the first handover request message is for requesting to hand over the terminal device to the first cell, and the first cell is the target cell for cell handover of the terminal device.

23. A computer-readable storage medium, wherein the computer-readable storage medium is configured to store a computer program; and when the computer program is run on a computer, the computer is enabled to perform the method according to any one of claims 1 to 8, or the computer is enabled to perform the method according to any one of claims 9 to 11.

24. A chip, comprising a processor and a communication interface, wherein the processor is configured to read instructions to perform the method according to any one of claims 1 to 8, or perform the method according to any one of claims 9 to 11.

25. A network apparatus, comprising a processor, wherein the processor is connected to a memory, the memory is configured to store a computer program, and the processor is configured to execute the computer program stored in the memory, to enable the apparatus to perform the method according to any one of claims 1 to 8 or perform the method according to any one of claims 9 to 11.

26. A communication system, comprising the communication apparatus according to any one of claims 12 to 19 and the communication apparatus according to any one of claims 20 to 22.
